# FASCICULE DE BREVET EUROPEEN

(11) **EP 2 345 013 B1**
(45) Date de publication et mention de la délivrance du brevet: **05.04.2017**
(21) Numéro de dépôt: 09755989.2
(22) Date de dépôt: 07.10.2009
(51) Int. Cl.: G08B 13/24

(54) **DISPOSITIF DE DETECTION DE LA PRESENCE D'UN OBJET OU D'UN ETRE VIVANT**
EINRICHTUNG ZUR DETEKTION DER ANWESENHEIT EINES OBJEKTS ODER EINES LEBEWESENS
DEVICE FOR DETECTING THE PRESENCE OF AN OBJECT OR OF A LIVING BEING

(30) Priorité: 07.10.2008 FR 0856782
(43) Date de publication de la demande: 20.07.2011
(73) Titulaire: BUBENDORFF, 68220 Attenschwiller (FR); Commissariat à l'Energie Atomique, 75015 Paris (FR)
(72) Inventeur: DANIELE, Norbert, F-38190 Bernin (FR)
(74) Mandataire: Rhein, Alain
(86) Numéro de dépôt international: PCT/FR2009/051918
(87) Numéro de publication internationale: WO 2010/040959

(56) Documents cités:
- WO-A1-02/04980
- JP-A- 10 095 338
- US-A- 3 560 970
- US-A- 4 079 361
- US-A- 4 109 233
- US-A- 4 274 226
- US-A1- 2007 152 818

## Description

La présente invention a trait à un dispositif de détection ainsi qu'à une installation de comptage, à une installation de protection ou à une installation de fermeture d'une ouverture que présente un bâtiment ou une piscine, une telle installation étant équipée d'un tel dispositif de détection.

Cette invention concerne le domaine de la fabrication des dispositifs conçus aptes à assurer une détection d'une présence/absence, d'un mouvement, ou d'une position d'un élément mobile par rapport à un autre élément qui est équipé d'un tel dispositif.

En fait, cette invention trouvera une application particulièrement appropriée, mais aucunement limitative, dans le domaine des installations pour la fermeture d'une ouverture que comporte un bâtiment ou une piscine.

A ce propos, on observera que l'on connaît, d'ores et déjà, des dispositifs de détection équipant de telles installations.

Ainsi, dans le document EP-1.092.833 il est décrit une installation adoptant la forme d'un volet roulant et équipée d'un dispositif de détection comportant, d'une part, deux capteurs disposés, de manière espacée, sur une coulisse à l'intérieur de laquelle est montée en coulissement l'extrémité des lames d'un tablier du volet roulant et, d'autre part, deux actionneurs associés, chacun, à une lame différente de ce tablier et constituant, chacun et avec un capteur, un commutateur fonctionnant sans contact. Chaque actionneur est constitué par un aimant émettant un signal magnétique tandis que chaque capteur est constitué par un élément sensible au magnétisme d'un tel aimant. Un tel capteur est apte à recevoir le signal magnétique d'un tel aimant et est raccordé électriquement à un circuit d'alarme réagissant lorsque les deux actionneurs sont déplacés simultanément hors de la zone de commutation des capteurs ce qui se produit, plus particulièrement, sous l'effet d'un soulèvement du tablier auquel il est procédé lors d'une tentative d'effraction.

Un tel dispositif de détection présente l'inconvénient de posséder des actionneurs rendus solidaires du tablier et se déplaçant de concert avec ce tablier. Lors du déploiement, respectivement du repliement, du tablier, ces actionneurs pénètrent dans les coulisses, respectivement dans le caisson, du volet roulant et sont susceptibles d'entrer en contact avec ces coulisses ou ce caisson du volet roulant, voire de s'y accrocher, entraînant une dégradation de l'installation, voire son disfonctionnement.

Par le document EP-1.146.199, l'on connaît, encore, un volet roulant comportant un dispositif de détection adoptant la forme d'un détecteur pyro-électrique, notamment à infrarouge. En cas de détection d'un obstacle dans la trajectoire du tablier, ce dispositif de détection est conçu pour commander l'arrêt du fonctionnement du moteur d'entraînement du tablier et, par conséquent, l'arrêt du déploiement de ce tablier.

L'on connaît, également, des volets roulants comportant, d'une part, un moteur pour l'entraînement d'un moyen de déploiement et le repliement du tablier d'un tel volet et, d'autre part, un moyen pour mesurer les caractéristiques électriques de ce moteur, plus particulièrement le courant dans ce moteur. Lorsque le tablier entre en contact avec un obstacle (notamment lorsqu'il atteint la fin de sa course ou en cas de contact avec une personne, un animal ou un objet), la charge du moteur augmente entraînant une variation du courant dont la mesure, par le moyen de mesure, entraîne une commande d'arrêt du fonctionnement de ce moteur.

Les installations et les dispositifs de l'état de la technique permettent, ainsi et uniquement, de détecter un seul type de phénomène constitué, soit par une tentative d'effraction perpétrée sur le tablier d'un volet roulant, soit par l'apparition d'un obstacle sur la trajectoire du tablier lors du déploiement de celui-ci.

Par le document US-4.079.361, on connaît un capteur d'intrusion et une antenne pour un tel capteur. Ce document décrit une installation pour détecter des modifications dans un faisceau de microondes envoyé d'un émetteur à un récepteur. Cet émetteur et ce récepteur possèdent des antennes pourvues d'ouvertures verticales conçues pour réduire les effets des réflexions du sol.

Le document US-2007/152818 divulgue un dispositif pour détecter une intrusion. Ce dispositif est conçu pour détecter une intrusion lorsqu'une onde électrique, reçue par le côté d'un récepteur juxtaposé au côté d'un transmetteur, est modifiée. Ce dispositif comporte une pluralité de moyens pour générer un signal de diffusion ayant un spectre de référence, une pluralité de moyens de corrélation configurés avec ces moyens pour générer un signal de diffusion ceci pour collecter le signal de diffusion du spectre de référence de sortie de ces moyens pour générer avec le signal reçu par le récepteur ainsi que des moyens pour ajuster la précision de la détection.

Le document JP10 095338 concerne un détecteur d'obstacle utilisant des lignes de transmission comme des câbles coaxiaux et un guide d'onde.

Par le document US-4.109.233, on connaît un capteur de proximité. En fait, dans ce document, il est décrit un rideau d'énergie formé en excitant des modes de faisceau d'ordre élevé, ceci dans une cavité résonnante ouverte. Un détecteur détecte les modifications dans les conditions de résonnance dues à la présence d'un objet dans le modèle mathématique dans lequel résonne l'énergie.

Dans le document US-4.274.226 il est décrit une détection d'un objet dans le chemin d'une porte en mouvement. Ce document divulgue un système et une méthode de détection de la position d'un objet par des radiations électromagnétiques, ceci lorsqu'un tel objet se trouve dans le chemin d'une porte coulissante. En fait, une radiation de microonde polarisée est émise d'une source associée à la porte et est projetée le long de l'extrémité de cette porte et de manière espacée par rapport à
cette porte, ceci par un moyen pour rediriger qui se déplace avec la porte. Un second moyen pour rediriger, qui se déplace aussi avec la porte, redirige la radiation vers un détecteur qui émet un signal lorsqu'une radiation est détectée. En fait, la présence d'un objet dans le chemin de la porte est indiquée par le blocage de la radiation dans le faisceau se déplaçant avec l'extrémité de la porte.

La présente invention se veut à même de remédier aux inconvénients des dispositifs de détection et des installations de type volets roulants susmentionnés et correspondant à l'état de la technique, ceci par le biais d'un nouveau dispositif de détection et de nouvelles installations équipées d'un tel dispositif de détection. Cette invention permet, également, de remédier à des inconvénients rencontrés pour d'autres types d'installations de l'état de la technique (notamment des piscines, des installations de comptage ou de protection), ceci par le biais de l'utilisation de ce nouveau dispositif de détection pour la réalisation de nouvelles installations du type susmentionné.

A cet effet, l'invention concerne une installation de fermeture d'une ouverture selon la revendication 1. Des modes de réalisation préférés sont revendiqués dans les revendications dépendantes.

Les avantages de la présente invention consistent en ce que le dispositif de détection fonctionne sur le principe de l'émission et de la réception d'un signal électromagnétique.

Un autre avantage consiste en ce que le signal émis est constitué par une barrière surfacique susceptible de s'étendre sur l'intégralité de la largeur et de la hauteur de l'ouverture ou de l'objet que le dispositif de détection équipe.

Un avantage additionnel consiste en ce que le dispositif de détection est particulièrement polyvalent et permet d'envisager son utilisation, non seulement pour différents types d'installations, mais, également, dans le cadre d'une même installation, ceci pour la détection de différents événements avec, en outre, la possibilité d'une réponse distincte et appropriée pour un même événement détecté.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et de face d'un dispositif de détection conforme à l'invention ;
- la figure 2 est une vue schématisée, en perspective et partielle d'une antenne d'émission d'un signal électromagnétique que comporte le dispositif illustré figure 1 ;
- la figure 3 est une vue similaire à la figure 2 correspondant à une antenne de réception du signal électromagnétique ;
- la figure 4 est une vue schématisée d'une installation pour la protection d'un objet, cette installation comportant un dispositif de détection tel qu'illustré figure 1 ;
- la figure 5 est une vue schématisée d'une installation de fermeture d'une ouverture d'un bâtiment, cette installation comportant un dispositif de détection tel qu'illustré figure 1 ;
- la figure 6 est une vue schématisée d'une installation de fermeture d'une ouverture d'une piscine, cette installation comportant un dispositif de détection tel qu'illustré figure 1 ;
- la figure 7 est une vue schématisée et de dessus, correspondant à une coupe réalisée dans une zone médiane d'un guide d'onde et relative à un autre mode de réalisation d'un dispositif de détection selon l'invention équipant une ouverture d'un bâtiment.

L'invention concerne le domaine de la fabrication des dispositifs 1 conçus aptes à assurer la détection d'une présence, d'une absence, d'un mouvement ou d'une position d'un élément mobile par rapport à un autre élément qui est équipé d'un tel dispositif 1.

Plus particulièrement, un tel dispositif 1 est conçu pour détecter la présence d'un objet ou d'un être vivant entre deux bornes.

Tel que visible sur les figures en annexe, un tel dispositif 1 de détection comporte, d'une part, au moins un moyen 2 pour émettre un signal électromagnétique 3 et, d'autre part, au moins un moyen 4 pour recevoir un tel signal électromagnétique 3.

En ce qui concerne le moyen d'émission 2, celui-ci comporte, d'une part, une antenne 20 d'émission d'un tel signal électromagnétique 3 associée à une première borne et, d'autre part, un moyen 21 pour exciter cette antenne d'émission 20 en vue de l'émission d'un tel signal électromagnétique 3 par cette antenne 20.

Cette antenne d'émission 20 adopte la forme d'un guide d'onde tubulaire 200 réalisé en un matériau métallique, de préférence en aluminium.

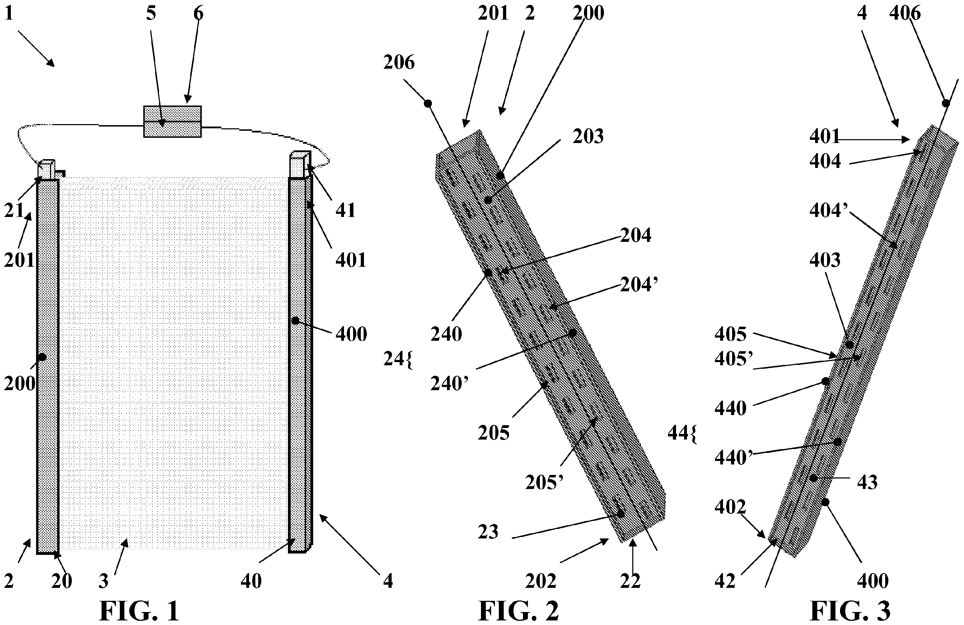

Tel que visible sur la figure 2, ce guide d'onde tubulaire présente une extrémité proximale 201 ainsi qu'une extrémité distale 202.

Ce guide d'onde tubulaire 200 est, au moins en partie, constitué par un profilé creux et de section parallélépipédique, de préférence rectangulaire ou carrée, de sorte que ce guide d'onde 200 présente, alors, une pluralité de parois dont l'une 203 est orientée en direction du moyen de réception 3.

En fait, ce profilé creux de section parallélépipédique présente des dimensions internes, respectivement externes, correspondant à la largeur (intérieure, respectivement extérieure) des parois de ce guide d'onde 200.

En particulier, la paroi 203 orientée en direction du moyen de réception 3 (ainsi que la paroi 207 du guide d'onde 200 qui lui est parallèle) présente une largeur interne déterminée (a) tandis que les parois, s'étendant à partir d'une telle paroi 203, présentent une largeur interne déterminée (b), selon le cas, égale (dans le cas d'un guide d'onde 200 de section carrée) ou différente (dans le cas d'un guide d'onde 200 de section rectangulaire) à la largeur (a).

Au moins une paroi du guide d'onde 200 de cette antenne d'émission 20 (plus particulièrement la paroi 203 orientée en direction du moyen de réception 4) est pourvue d'au moins une ouverture (204 ; 204').

A ce propos, on observera que la présence d'au moins une telle ouverture (204 ; 204') permet, avantageusement, de conférer les fonctionnalités d'une antenne d'émission 20, plus particulièrement celles d'un dispositif rayonnant un signal électromagnétique 3, à la paroi 203 du guide d'onde 200 pourvue d'au moins une telle ouverture (204 ; 204').

Selon un mode particulier de réalisation illustré figure 2, le guide d'onde 200 comporte, en fait, une pluralité d'ouvertures (204 ; 204') ménagées au niveau de sa paroi 203 orientée en direction du moyen de réception 3.

Ces ouvertures (204 ; 204') sont, de préférence, alignées selon au moins une rangée (205 ; 205') d'ouvertures (209 ; 209').

Au sein d'une telle rangée (205 ; 205'), les ouvertures (204 ; 204') sont positionnées sensiblement en un endroit où le champ électromagnétique est maximum.

En particulier, le pas (p) entre deux ouvertures (204 ; 204') successives d'une même rangée (205 ; 205') est compris entre 2 et 6 fois la longueur d'onde guidée divisée par 2 (2*λg/2 ≤ p ≤ 6*λg/2), de préférence de l'ordre de 4 fois cette longueur d'onde guidée divisée par 2 (p ≈ 4*λg/2).

Un tel mode de réalisation permet, avantageusement, de répartir le champ électromagnétique sur toute la longueur du guide d'onde 200.

Un mode de réalisation préféré de l'invention illustré figure 2 consiste, alors, en ce que le guide d'onde 200 comporte deux rangées (205 ; 205'), de préférence parallèles, d'ouvertures (204 ; 204').

Ces deux rangées (205, 205').
- sont espacées d'une distance correspondant sensiblement à la moitié de la largeur (plus particulièrement la largeur interne a) de la paroi 203 pourvue des ouvertures (204 ; 204') et/ou ;
- s'étendent de part et d'autre d'un axe 206 (de préférence de manière parallèle à cet axe 406), cet axe 206 étant de préférence constitué par l'axe médian de la paroi 203 pourvue des ouvertures (204 ; 204') et que comporte le guide d'onde 200.

Tel que visible sur cette même figure 2, les ouvertures 204 d'une rangée 205 sont, de préférence, décalées longitudinalement par rapport aux ouvertures 204' de l'autre rangée 204'.

La ou les ouvertures (204 ; 204') peuvent présenter une forme quelconque, par exemple une forme circulaire. Cependant et selon un mode de réalisation préféré de l'invention, cette ou ces ouvertures (204 ; 204') présentent une forme allongée, plus particulièrement ovale, en losange ou (et de préférence) en fente (une telle fente étant préférentiellement de forme rectangulaire).

Cette ou ces ouvertures (204 ; 204') présentent une longueur (1) correspondant, de préférence, à la moitié de la longueur d'onde λ (1 = λ/2).

Cette ou ces ouvertures (204, 204') allongées et/ou un alignement de ces ouvertures (circulaires ou allongées) s'étendent de manière sensiblement parallèle à la direction longitudinale d'extension du guide d'onde 200 au niveau duquel une telle ouverture (204 ; 204') est ménagée.

La présence d'une ouverture allongée (204) ou d'un alignement d'ouvertures (204 ; 204') permet, avantageusement, de conférer au signal électromagnétique 3 la forme d'une barrière surfacique immatérielle.

En fait, une telle barrière surfacique présente une certaine épaisseur. Plus précisément, cette barrière surfacique immatérielle présente une hauteur sensiblement égale à la longueur des guides d'onde 200 et 400. Sa largeur correspond à la distance séparant les deux guides d'onde. Son épaisseur est quant à elle variable d'un guide d'onde à l'autre. A proximité d'un guide d'onde, son épaisseur correspond sensiblement à la largeur des guides d'onde. L'épaisseur de la barrière surfacique est maximale à mi-distance des guides d'onde.

Tel que mentionné ci-dessus, le moyen d'émission 2 comporte, encore, un moyen 21 d'excitation de l'antenne d'émission 20.

A ce propos, il convient d'observer que le moyen d'excitation 21 peut être constitué par un système apte à émettre une porteuse pure comme un oscillateur contrôlé en tension.

Cependant, un tel moyen d'excitation 21 peut, encore, être constitué par un système apte à émettre au moins une modulation d'une telle porteuse pure. Un tel système peut adopter la forme d'un oscillateur à diode ou d'un oscillateur à transistor, de préférence un transistor à effet de champ.

Selon une autre caractéristique, ce moyen d'excitation 21 est associé à l'antenne d'émission 20 en étant engagé (au moins en partie) à l'intérieur de ce guide d'onde 200.

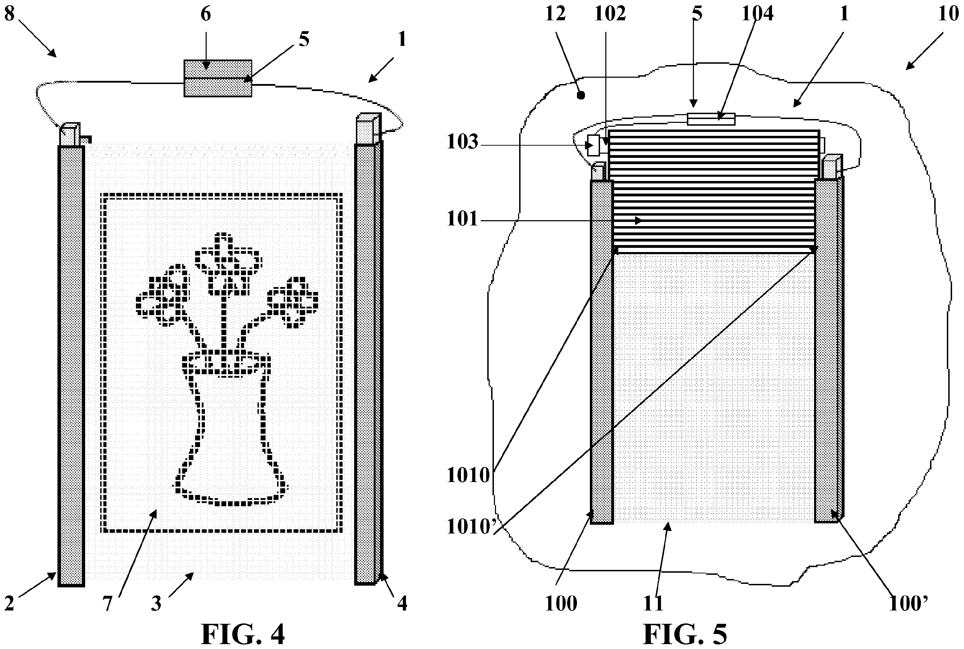

Selon un premier mode de réalisation illustré figures 1, 4 5 et 6, ce moyen d'excitation 21 peut être engagé à l'intérieur de ce guide d'onde 200 au niveau d'une extrémité (notamment proximale 201) de ce guide d'onde 200.

Dans un pareil cas, le moyen d'émission 2 comporte, encore, au moins un moyen 22 pour la fermeture du guide d'onde 200. Un tel moyen de fermeture 22 est associé à au moins une extrémité (201, 202) de ce guide d'onde 200 (plus particulièrement à l'extrémité distale 202, opposée à l'extrémité proximale 201 au niveau de laquelle le moyen d'excitation 21 est introduit dans le guide d'onde 200) et est, de préférence, constitué par un moyen pour la réalisation d'un court-circuit.

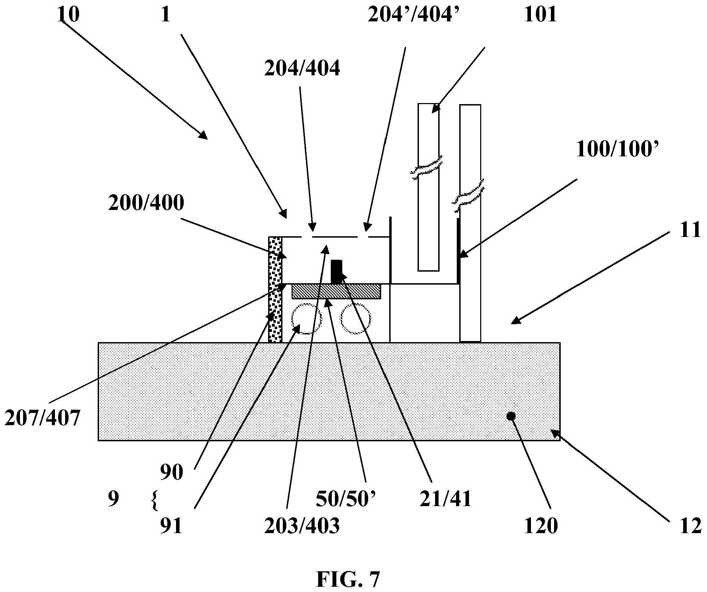

Cependant et selon un mode de réalisation préféré de l'invention illustré figure 7, le guide d'onde 200 de l'antenne d'émission 20 reçoit, intérieurement, le moyen d'excitation 21 qui est, d'une part, engagé à l'intérieur de ce guide d'onde 200 et, d'autre part, positionné dans une zone médiane de ce guide d'onde 200 comprise entre l'extrémité proximale 201 et l'extrémité distale 202 de ce guide d'onde 200.

Un mode préféré de réalisation consiste en ce que ce moyen d'excitation 21 est, de préférence, positionné sensiblement à égale distance de l'extrémité proximale 201 et de l'extrémité distale 202 de ce guide d'onde 200.

Un tel mode de réalisation permet, avantageusement, une meilleure propagation et une meilleure répartition du champ dans le guide d'onde 200.

Une caractéristique additionnelle consiste en ce que le moyen d'excitation 21 est, alors, positionné à proximité d'une ouverture (204 ; 204') dont est pourvue la paroi 203 du guide d'onde 200 de l'antenne d'émission 20 dans une zone médiane de ce guide d'onde 200, de préférence sensiblement à égale distance de l'extrémité proximale 201 et de l'extrémité distale 202 de ce guide d'onde 200.

De manière additionnelle, ce moyen d'excitation 21 est positionné au droit ou au travers d'un orifice traversant ménagé dans une paroi 207 du guide d'onde 200 parallèle à la paroi 203 pourvue d'ouvertures (204, 209'), ceci dans une zone médiane de ce guide d'onde 200, de préférence sensiblement à égale distance de l'extrémité proximale 201 et de l'extrémité distale 202 de ce guide d'onde 200.

Un tel mode de réalisation permet, avantageusement, d'assurer une bonne adaptation entre l'émetteur et le guide d'onde 200 ce qui permet, au moins en partie, d'optimiser le gain de transmission.

Dans le cas d'un moyen d'excitation 21 positionné sensiblement dans une zone médiane du guide d'onde 200, les extrémités proximale 201 et distale 202 peuvent, avantageusement, être dépourvues d'un moyen de fermeture du type susmentionné et être de type débouchant, ceci en restant ouvertes.

Un tel mode de réalisation permet, avantageusement, de couper une portion d'extrémité du guide d'onde 200, ceci pour ajuster ce guide d'onde 200 aux dimensions d'un objet que l'on souhaite protéger, d'une zone que l'on souhaite délimiter ou d'une ouverture que l'on souhaite équiper.

Une caractéristique additionnelle consiste en ce que le moyen 2 d'émission comporte, encore, un moyen 23 pour la protection de l'antenne d'émission 2.

Un tel moyen 23 de protection est constitué par un moyen pour recouvrir au moins une partie de la face externe de la paroi 203 du guide d'onde 200 au niveau laquelle est ménagée au moins une ouverture (204 ; 204').

Un mode préféré de réalisation consiste en ce que ce moyen de recouvrement est réalisé en un matériau amagnétique, de préférence de faible épaisseur, notamment sous la forme d'un film.

En fait, ce moyen de recouvrement permet, avantageusement, d'éviter l'obstruction des ouvertures (204 ; 204'), notamment par des insectes, des feuilles, des poussières ou autres.

Tel que mentionné ci-dessus, l'antenne d'émission 20 adopte la forme d'un guide d'onde tubulaire 200, au moins en partie, constitué par un profilé creux de section parallélépipédique.

Selon un premier mode de réalisation l'antenne d'émission 20 d'un tel guide d'onde 200 est uniquement constituée par un tel profilé (figure 7).

Cependant et selon un deuxième mode de réalisation, l'antenne 20 du moyen d'émission 2 comporte au moins une aile s'étendant en direction de l'antenne 40 du moyen 4 de réception, ceci à partir de la paroi 203 du guide d'onde 200 pourvue d'au moins une ouverture (204, 204'), plus particulièrement dans le prolongement des parois du guide d'onde 200 adjacentes et perpendiculaires à la paroi 203 comportant la ou les ouvertures (204 ; 204').

Une telle aile s'étend, de préférence sur toute la longueur de ce guide d'onde 200.

Finalement, le moyen d'émission 2 peut comporter un moyen 24 pour diriger le signal électromagnétique 3 en direction du moyen de réception 4.

Tel que visible sur la figure 2, ce moyen 24 pour diriger le signal électromagnétique 3 est constitué par deux ailes (240 ; 240'), sensiblement parallèles, positionnées de part et d'autre de la ou des ouvertures (204 ; 204') du guide d'onde 200 de l'antenne d'émission 2.

En fait, ces deux ailes (240 ; 240') s'étendant en direction du moyen de réception 4 et à partir du guide d'onde 200, plus particulièrement à partir de la paroi 203 du guide d'onde 200 pourvue d'une ou plusieurs ouvertures (204 ; 204').

Plus particulièrement, ces ailes (240 ; 240') se situent dans le prolongement des parois du guide d'onde 200 adjacentes et perpendiculaires à la paroi 203 comportant la ou les ouvertures (204 ; 204').

En ce qui concerne le moyen 4 de réception du signal électromagnétique 3, celui-ci comporte, d'une part, une antenne 40 de réception d'un tel signal 3 associée à une deuxième borne et, d'autre part, un moyen 41 pour détecter un tel signal électromagnétique 3.

Cette antenne de réception 40 adopte la forme d'un guide d'onde tubulaire 400 réalisé en un matériau métallique, de préférence en aluminium, et présentant une extrémité proximale 401 ainsi qu'une extrémité distale 402.

Ce guide d'onde tubulaire 400 est, au moins en partie, constitué par un profilé creux et de section parallélépipédique (de préférence rectangulaire ou carrée) de sorte que ce guide d'onde 400 présente une pluralité de parois dont l'une 403 est orientée en direction du moyen d'émission 2.

Là encore, ce profilé creux de section parallélépipédique présente des dimensions internes, respectivement externes, correspondant à la largeur (intérieure, respectivement extérieure) des parois de ce guide d'onde 400.

En particulier, la paroi 403 orientée en direction du moyen d'émission 2 (ainsi que la paroi 407 du guide d'onde 200 qui lui est parallèle) présente une largeur interne déterminée (a) tandis que les parois, s'étendant à partir d'une telle paroi 403, présentent une largeur interne déterminée (b), selon le cas, égale (dans le cas d'un guide d'onde 400 de section carrée) ou différente (dans le cas d'un guide d'onde 400 de section rectangulaire) à la largeur (a).

Comme illustré figure 3, au moins une paroi du guide d'onde 400 de cette antenne de réception 40 est pourvue d'au moins une ouverture (404 ; 404').

La ou les ouvertures (404 ; 404') du guide d'onde 400 de l'antenne de réception 40 présentent, de préférence, des caractéristiques similaires (ou, et de préférence, identiques) à celle de la ou des ouvertures (204 ; 204') du guide d'onde 200 de l'antenne d'émission 20, ceci avec les mêmes effets et les mêmes avantages.

En particulier, cette ou ces ouvertures (404 ; 404') sont ménagées au niveau de la paroi 403 du guide d'onde 400 orientée en direction du moyen 2 d'émission.

En fait, ce guide d'onde 400 comporte une pluralité d'ouvertures (404 ; 404'), de préférence alignées selon au moins une rangée (405 ; 405') d'ouvertures (404 ; 404').

Là encore, au sein d'une telle rangée (405 ; 405'), les ouvertures (404 ; 404') sont positionnées sensiblement en un endroit où le champ électromagnétique est maximum.

En particulier, le pas (p) entre deux ouvertures (404 ; 404') successives d'une même rangée (405 ; 405') est compris entre 2 et 6 fois la longueur d'onde guidée divisée par 2 (2*λg/2 ≤ p ≤ 6*λg/2), de préférence de l'ordre de 4 fois cette longueur d'onde guidée divisée par 2 (p ≈ 4*λg/2).

Là encore, ceci permet, avantageusement, de répartir le champ électromagnétique sur toute la longueur du guide d'onde 400.

De manière préférentielle, ce guide d'onde 400 comporte deux rangées (405 ; 405'), de préférence parallèles, d'ouvertures (404 ; 404').

Là encore, ces deux rangées (405, 405') :
- sont espacées d'une distance correspondant sensiblement à la moitié de la largeur (plus particulièrement la largeur interne a) de la paroi 403 pourvue des ouvertures (404 ; 404') et/ou ;
- s'étendent de part et d'autre d'un axe 406 (de préférence de manière parallèle à cet axe 406), cet axe 206 étant de préférence constitué par l'axe médian de la paroi 403 pourvue des ouvertures (404 ; 404') et que comporte le guide d'onde 400.

Là encore, les ouvertures 404 d'une rangée 405 sont, de préférence, décalées longitudinalement par rapport aux ouvertures 404' de l'autre rangée 405'.

Cette ou ces ouvertures (404 ; 404') peuvent présenter une forme quelconque, par exemple circulaire, ou (et de préférence) allongée, plus particulièrement ovale, en losange ou (et de préférence) en fente (préférentiellement rectangulaire).

La longueur (1) de cette ou ces ouvertures (404 ; 404') correspond, de préférence, à la moitié de la longueur d'onde λ (1 = λ/2)

Cette ou ces ouvertures (404, 404') allongées et/ou un alignement de ces ouvertures s'étendent de manière sensiblement parallèle à la direction longitudinale d'extension du guide d'onde 400.

Tel que mentionné ci-dessus, le moyen de réception 4 comporte, encore, un moyen 41 pour détecter un signal électromagnétique 3 émis par le moyen d'émission 2.

Un tel moyen de détection 41 peut être constitué par une diode à faible consommation, plus particulièrement une diode de type Schottky. Le moyen de détection 41 peut également comprendre un circuit mélangeur ou un convertisseur analogique-numérique suivi d'un circuit de traitement de signaux.

On observera que le signal à détecter peut présenter un faible niveau de sorte que ce moyen de détection 41 peut être complété (notamment précédé dans la chaîne de traitement du signal reçu) par un amplificateur, plus particulièrement à faible bruit.

Selon une autre caractéristique, ce moyen de détection 41 est associé à l'antenne de réception 40 en étant engagé (au moins en partie) à l'intérieur de ce guide d'onde 400.

Selon un premier mode de réalisation illustré figures 1, 4 5 et 6, ce moyen de détection 41 peut être engagé à l'intérieur de ce guide d'onde 400 au niveau d'une extrémité (notamment proximale 401) de ce guide d'onde 400.

Dans un pareil cas, le moyen de réception 4 peut, encore, comporter au moins un moyen 42 pour la fermeture du guide d'onde 400. Ce moyen de fermeture 42 est associé à au moins une extrémité (401, 402) de ce guide d'onde 400 (plus particulièrement à l'extrémité distale 402, opposée à l'extrémité proximale 401 au niveau de laquelle le moyen de détection 41 est introduit dans le guide d'onde 400) et est, de préférence, constitué par un moyen pour la réalisation d'un court-circuit.

Cependant et selon un mode de réalisation préféré de l'invention illustré figure 7, le guide d'onde 400 de l'antenne de réception 40 reçoit, intérieurement, le moyen de détection 41 qui est, d'une part, engagé à l'intérieur de ce guide d'onde 400 et, d'autre part, positionné dans une zone médiane de ce guide d'onde 400 comprise entre l'extrémité proximale 401 et l'extrémité distale 402 de ce guide d'onde 400.

Un mode préféré de réalisation consiste en ce que ce moyen de détection 41 est positionné sensiblement à égale distance de l'extrémité proximale 401 et de l'extrémité distale 402 de ce guide d'onde 400.

Une caractéristique additionnelle consiste en ce que le moyen de détection 41 est, alors, positionné à proximité d'une ouverture (404 ; 404') dont est pourvue la paroi 403 du guide d'onde 400 de l'antenne de réception 40 dans une zone médiane de ce guide d'onde 400, de préférence sensiblement à égale distance de l'extrémité proximale 401 et de l'extrémité distale 402 de ce guide d'onde 400.

De manière additionnelle, ce moyen de détection 41 est positionné au droit ou au travers d'un orifice traversant ménagé dans une paroi 407 du guide d'onde 400 parallèle à la paroi 403 pourvue d'ouvertures (404, 404'), ceci dans une zone médiane de ce guide d'onde 400, de préférence sensiblement à égale distance de l'extrémité proximale 401 et de l'extrémité distale 402 de ce guide d'onde 400.

Dans le cas d'un moyen de réception 41 positionné sensiblement dans une zone médiane du guide d'onde 400, les extrémités proximale 401 et distale 402 peuvent, avantageusement, être dépourvues d'un moyen de fermeture du type susmentionné et être de type débouchant, ceci en restant ouvertes.

De manière additionnelle, le moyen de réception 4 comporte, encore, un moyen 43 pour la protection de l'antenne réceptrice 40. Ce moyen 43 de protection est, là encore, constitué par un moyen pour recouvrir au moins une partie de la face externe de la paroi 403 du guide d'onde 400 au niveau laquelle est ménagée au moins une ouverture (404 ; 404'). Ce moyen de recouvrement est réalisé en un matériau amagnétique, de préférence de faible épaisseur, notamment sous la forme d'un film.

Tel que mentionné ci-dessus, l'antenne de réception 40 adopte la forme d'un guide d'onde tubulaire 400, au moins en partie, constitué par un profilé creux de section parallélépipédique.

Selon un premier mode de réalisation l'antenne de réception 40 d'un tel guide d'onde 200 est uniquement constituée par un tel profilé (figure 7).

Cependant et selon un deuxième mode de réalisation, l'antenne 40 du moyen de réception 4 comporte au moins une aile s'étendant en direction de l'antenne 20 du moyen 2 d'émission, ceci à partir de la paroi 403 du guide d'onde 400 pourvue d'au moins ouverture (404, 404'), plus particulièrement dans le prolongement des parois du guide d'onde 400 adjacentes et perpendiculaires à la paroi 403 comportant la ou les ouvertures (404 ; 404').

Une telle aile s'étend, de préférence, sur toute la longueur de ce guide d'onde 400.

Finalement, le moyen de réception 4 peut comporter un moyen 44 pour diriger le signal électromagnétique 3 en direction de la ou des ouvertures (404 ; 404') du guide d'onde 400 de l'antenne réceptrice 40.

Ce moyen 44 pour diriger le signal électromagnétique 3 est constitué par deux ailes (440 ; 440'), sensiblement parallèles, positionnées de part et d'autre de la ou des ouvertures (404 ; 404'), s'étendant en direction du moyen d'émission 2 et à partir du guide d'onde 400, plus particulièrement à partir de la paroi 403 du guide d'onde 400 comportant une ou plusieurs ouvertures (404 ; 404').

Plus particulièrement, ces ailes (440 ; 440') se situent, là encore, dans le prolongement des parois du guide d'onde 400 adjacentes et perpendiculaires à la paroi 403 comportant la ou les ouvertures (404 ; 440').

Selon une autre caractéristique de l'invention, le dispositif 1 de détection comporte au moins un moyen 9 pour l'alimentation électrique du moyen d'émission 2 et du moyen de réception 4.

Un mode particulier de réalisation illustré figure 7 consiste en ce que le dispositif 1 comporte, alors, au moins un capteur solaire 90 équipant le moyen 2 pour émettre un signal électromagnétique (plus particulièrement le guide d'onde 200 que comporte ce moyen 2), respectivement le moyen 4 pour recevoir ce signal électromagnétique (plus particulièrement le guide d'onde 400 que comporte ce moyen 4), ceci pour une alimentation électrique du moyen d'excitation 21, respectivement du moyen de détection 41, que comporte ce moyen d'émission 2, respectivement ce moyen de réception 4. La présence d'un tel capteur solaire 90 permet, avantageusement, de rendre le dispositif de détection 1 autonome en énergie. Le moyen d'alimentation électrique 9 peut, encore comporter au moins une batterie 91.

Une caractéristique additionnelle consiste en ce que le dispositif 1 de détection comporte un moyen 5 pour la gestion des moyens d'émission 2 et de réception 4.

Un premier mode de réalisation illustré figure 1 représente un moyen 5 de gestion raccordé (plus particulièrement de manière filaire), d'une part, au moyen 2 d'émission, plus particulièrement au moyen 21 d'excitation et, d'autre part, au moyen 4 de réception, plus particulièrement au moyen 41 de détection.

Ce moyen 5 de gestion comporte, d'une part, un moyen pour alimenter les moyens d'émission 2 et de réception 4 et, d'autre part, un moyen pour commander l'alimentation de ces moyens d'émission 2 et de réception 4. De manière préférentielle, ce moyen 5 de gestion peut, encore, comporter un moyen pour synchroniser (notamment de manière périodique et/ou à intervalles réguliers) la commande de l'alimentation du moyen de réception 4 avec celle du moyen d'émission 2.

Un tel mode de réalisation permet d'activer les moyens d'émission 2 et de réception 4 uniquement de manière périodique et/ou à intervalles réguliers, ceci pour assurer une émission et une réception de manière périodique et/ou à intervalles réguliers. Ceci permet, avantageusement, de limiter et d'optimiser la consommation d'énergie du dispositif 1.

Cependant et selon un deuxième mode de réalisation illustré figure 7, ce moyen 5 de gestion comporte, d'une part, un premier élément 50 dont est pourvu le moyen 2 d'émission et, d'autre part, un deuxième élément 50' dont est pourvu le moyen 4 de réception.

Selon une autre caractéristique, ce premier élément 50, respectivement ce deuxième élément 50', comporte un moyen pour assurer une émission de manière périodique et/ou à intervalles réguliers, respectivement un moyen pour assurer une réception de manière périodique et/ou à intervalles réguliers, là encore pour limiter et optimiser la consommation d'énergie.

De plus, ce premier élément 50 et/ou ce deuxième élément 50' de ce moyen de gestion 5 comportent un moyen pour synchroniser ce premier 50 et ce deuxième élément 50' (plus particulièrement le deuxième élément 50' avec le premier élément 50), ceci en vue de la synchronisation du moyen de réception 4 avec le moyen d'émission 2. Un tel moyen de synchronisation est, de préférence, constitué par un algorithme de synchronisation du moyen de réception 4 sur le moyen d'émission 2.

Une autre caractéristique consiste en ce que ce premier élément 50, respectivement ce deuxième élément 50', soit comporte un moyen 9 (plus particulièrement sous forme d'au moins un capteur solaire tel que susmentionné) pour l'alimentation électrique du moyen d'émission 2, respectivement du moyen de réception 4, soit (et de préférence comme illustré figure 7) est associé (plus particulièrement par liaison filaire) à un tel moyen d'alimentation électrique 9 (capteur 90 + batterie 91).

De manière additionnelle, ce premier élément 50, respectivement ce deuxième élément 50', comporte, alors, un moyen pour commander l'alimentation électrique de ce moyen d'émission 2, respectivement de ce moyen de réception 4.

Une caractéristique additionnelle consiste en ce que ce premier élément 50, respectivement ce deuxième élément 50', soit comporte le moyen d'excitation 21, respectivement le moyen de détection 41, soit est associé à ce moyen d'excitation 21, respectivement à ce moyen de détection 41.

En fait, un tel (premier 50 et/ou deuxième 50') élément peut être constitué par un dispositif électronique (notamment autonome) intégrant une partie au moins des moyens susmentionnés et, adoptant, plus particulièrement, la forme d'une carte électronique ou d'un boîtier recevant une telle carte.

Un mode préféré de réalisation consiste en ce qu'un tel (premier 50 et/ou deuxième 50') élément se présente sous la forme d'une carte électronique à laquelle est associé le moyen d'excitation 21, respectivement le moyen de détection 41, qui se positionne contre une telle carte (figure 7). Un tel mode de réalisation permet, avantageusement, de réduire les pertes de signal.

A ce propos, on observera que, selon un mode de réalisation préféré illustré figure 7, seul le moyen d'excitation 21, respectivement le moyen de détection 41, est positionné à l'intérieur du guide d'onde (200 ; 400) du moyen d'émission 2, respectivement du moyen de réception 4 (figure 7). Ce moyen d'excitation 21, respectivement ce moyen de détection 41, peut, alors, traverser un orifice traversant ménagé dans une paroi (207 ; 407) de ce guide d'onde (200 ; 400), plus particulièrement dans une paroi (207 ; 407) parallèle à la paroi (203 ; 403) pourvue des ouvertures (204, 204' ; 404, 404').

Dans un pareil cas, le premier élément 50, respectivement le deuxième élément 50' , est positionné extérieurement à ce guide d'onde (200 ; 400), notamment en applique contre cette paroi (207 ; 407) parallèle à la paroi (203 ; 403) pourvue des ouvertures (204, 204' ; 404, 404').

De manière additionnelle, ce moyen de gestion 5 (plus particulièrement le premier 50 et/ou le deuxième élément 50' que comporte ce moyen de gestion 5) peut, encore, comporter un moyen pour la transmission (plus particulièrement par onde radio) d'une information (plus particulièrement une information de commande) à un organe déporté, notamment un moyen d'alerte visuelle et/ou sonore 6, un moteur 103 ou analogue comme il sera décrit ci-dessous.

Finalement, le dispositif de détection 1 (plus particulièrement son moyen de gestion 5) peut, encore, comporter un moyen pour analyser un signal reçu SR (ou les variations de ce signal reçu SR) par le moyen de réception 4, ceci en vue de déclencher, le cas échéant, une action appropriée et en liaison avec ce signal reçu SR.

En ce qui concerne le signal reçu SR, celui-ci peut être constitué, selon le cas, par un signal électromagnétique reçu par l'antenne de réception 40, par un signal électrique fourni par le moyen de détection 41 associé à cette antenne de réception 40 ou encore par une composante d'un tel signal électrique/électromagnétique (plus particulièrement sa puissance, son instant de réception, sa phase, sa fréquence ou autre).

Une telle analyse peut, encore, être réalisée en fonction d'un signal de commande SC qui peut être, selon le cas :
- un signal électrique délivré au moyen d'excitation 21 en vue d'exciter l'antenne d'émission 20 ;
- un signal électromagnétique fourni par le moyen d'excitation 21 à l'antenne d'émission 20 ;
- une composante d'un tel signal électrique/électromagnétique, plus particulièrement sa puissance, son instant d'émission, sa phase, sa fréquence ou autre.

A ce propos, il convient d'observer que le signal reçu SR et le signal de commande SC sont reliés par une fonction de transfert FT du type SR = FT (SC).

En fait, une telle fonction de transfert FT est définie à partir du positionnement relatif de chacune des deux antennes (20 ; 40) ainsi que de la structure de celles-ci. Cette fonction de transfert FT dépend, entre autre, de la longueur, de la section, du matériau du guide d'onde (200 ; 400) ainsi que du nombre d'ouvertures (204, 204' ; 404 ; 404'), de leur forme, de leurs dimensions.

A titre d'exemples non limitatifs, il est possible d'envisager les fonctions de transfert FT suivantes :
- puissance du signal électrique reçu en fonction de la puissance du signal électrique émis ;
- émission d'un signal électrique sous la forme d'une impulsion et réception d'une impulsion, la fonction de transfert indiquant alors la durée de « vol » de l'impulsion, c'est-à-dire la durée séparant les deux impulsions ;
- émission d'un signal électrique sous la forme d'une rampe de fréquences (on émet un signal à une fréquence initiale fi puis on augmente progressivement la fréquence jusqu'à une fréquence finale) et réception après filtrage (électronique ou matériel) d'un signal ayant une fréquence fr comprise entre les fréquences initiale et finale, la fonction de transfert indiquant, alors par exemple, la durée séparant l'instant de démarrage de la rampe et l'instant de réception de la fréquence fr.

Finalement et selon une caractéristique additionnelle, le dispositif 1 de détection peut, encore, comporter un moyen 6 d'alerte visuelle et/ou sonore, raccordé (selon le cas, de manière filaire ou par ondes radio) au moyen 5 de gestion (plus particulièrement au moyen d'analyse que comporte ce moyen de gestion 5), et susceptible d'être activé par ce moyen de gestion 5, plus particulièrement en fonction des caractéristiques du signal reçu SR par le moyen de réception 4.

Tel qu'il sera décrit plus avant dans la description, l'invention concerne, également, un procédé pour la détection de la présence d'un objet ou d'un être vivant entre deux bornes.

Ce procédé est mis en oeuvre par le dispositif de détection 1 décrit ci-dessus et consiste :
- selon une première étape (phase de calibrage), à déterminer la fonction de transfert FT susmentionnée et reliant un signal reçu SR à un signal de commande SC, en l'absence d'objets ou d'être vivants dans la barrière surfacique ;
- selon une deuxième étape (phase d'utilisation), à analyser un signal reçu SR en comparant ce signal reçu SR à la fonction de transfert FT attendue et déterminée lors de la première étape (plus particulièrement pour un signal de commande SC donné), ceci en vue de déterminer si ce signal reçu SR correspond à la fonction de transfert FT attendue ou en diffère ;
- selon une troisième étape, à déclencher une action en cas de différence.

A ce propos, on observera que, au cours de cette deuxième étape, le procédé peut, encore, consister à analyser, le cas échéant, la différence (notamment l'écart) entre le signal reçu SR et la fonction de transfert FT attendue, ceci en vue de déterminer la nature de l'événement correspondant à cette différence et, ainsi, déclencher (au cours de la troisième étape du procédé) une action appropriée à l'événement détecté.

Le dispositif 1 de détection décrit ci-dessus présente des caractéristiques techniques qui lui confèrent une polyvalence certaine permettant, de manière avantageuse, d'envisager son utilisation dans différents domaines.

Ainsi, ce dispositif de détection 1 peut être utilisé dans le cadre de la protection d'un objet 7, plus particulièrement d'un objet de valeur tel qu'une oeuvre d'art.

L'invention peut, alors, concerner une installation 8 pour la protection d'un tel objet 7, cette installation 8 comportant, d'une part, un dispositif 1 pour la détection de la présence d'un être vivant (plus particulièrement la main d'un malfaiteur) ou d'un outil (plus particulièrement un outil de préhension ou analogue) à proximité ou en contact avec cet objet 7. Un tel dispositif permet, alors, une détection de l'approche et/ou du contact et/ou de la saisie de cet objet 7.

De manière avantageuse, ce dispositif 1 de détection peut présenter les caractéristiques techniques susmentionnées et comporter au moins un moyen d'émission 2 ainsi qu'au moins un moyen de réception 4. Ces moyens (2 ; 4) sont positionnés de part et d'autre et à l'avant de l'objet 7 (et/ou d'au moins un côté de cet objet 7) à protéger et peuvent être associés, chacun, à une borne (voire encore constituant ou constitués par une telle borne) positionnée à proximité de cet objet.

D'autre part, cette installation 8 comporte un moyen 6 d'alerte visuelle et/ou sonore conçu pour être actionné en cas de détection, par le dispositif de détection 1, d'un être vivant ou d'un outil (plus particulièrement d'une approche et/ou d'un contact et/ou d'une saisie de cet objet 7 par un tel être vivant ou par un tel outil).

Le dispositif 1 de détection conforme à l'invention peut, encore, être utilisé pour le dénombrement d'éléments mobiles traversant une zone, plus particulièrement délimitée par deux bornes.

A ce propos, on observera que de tels éléments mobiles peuvent, par exemple, être constitués par des être vivants (notamment des passants, des sportifs ou des animaux) ou par des objets en mouvement.

Dans un pareil cas, l'invention peut, alors, concerner une installation de comptage d'un nombre d'éléments mobiles traversant une zone et comportant, d'une part, un dispositif 1 pour la détection du passage d'au moins un élément au travers de cette zone.

De manière avantageuse, un tel dispositif 1 de détection peut présenter les caractéristiques susmentionnées et comporter au moins un moyen d'émission 2 ainsi qu'au moins un moyen de réception 4, ces moyens (2 ; 4) étant positionnés de part et d'autre de la zone à traverser.

Une telle zone peut être délimitée par un portique, d'une part, destiné à être traversé par les éléments mobiles et, d'autre part, comportant des montants latéraux (notamment verticaux), plus particulièrement sous forme de bornes, délimitant cette zone, et auxquels sont associés (voire au moins en partie constitués par) les guides d'onde (200 ; 400) des moyens d'émission 2 et de réception 4.

D'autre part, cette installation comporte un dispositif pour le comptage du nombre d'éléments mobile détectés par le dispositif 1 de détection. Ce dispositif de comptage est, alors, soit raccordé à ce dispositif 1 de détection (par exemple, au moyen de réception 4 ou au moyen de gestion 5), soit intégré à ce dispositif 1 (notamment au moyen de gestion 5).

Le dispositif 1 de détection conforme à l'invention peut, également, être utilisé pour être associé à une installation 10 de fermeture d'une ouverture 11 que présente un bâtiment 12 ou une piscine 13.

A ce propos, il convient d'observer que, dans le cas d'un bâtiment 12, une telle ouverture 11 est définie au niveau de la maçonnerie 120 et peut être constituée par une embrasure de baie de fenêtre, de porte, de porte-fenêtre, de porte de garage ou autre.

Dans le cas d'une piscine 13, une telle ouverture 11 est définie par une zone délimitée par le contour intérieur du bord supérieur des margelles de cette piscine 13. C'est, plus particulièrement, par une telle ouverture 11 qu'il est possible de pénétrer à l'intérieur de la piscine 13.

Une telle ouverture 11 (de bâtiment 12 ou de piscine 13) peut être complétée par une installation 10 conçue pour assurer la fermeture ainsi que l'ouverture de cette ouverture 11.

De manière connue en soi, une telle installation 10 comporte, usuellement, des coulisses latérales (100 ; 100') destinées à venir se positionner en regard l'une 100 de l'autre 100', ceci de part et d'autre de l'ouverture 11.

Une telle coulisse latérale (100 ; 100') adopte, usuellement, une forme en « U » et comporte au moins, d'une part, un fond et, d'autre part, deux ailes parallèles s'étendant à partir de ce fond.

Une telle installation 10 comporte, également, un tablier 101 destiné à refermer l'ouverture 11 et présentant des extrémités latérales (1010 ; 1010') montées en coulissement à l'intérieur des coulisses latérales (100 ; 100').

En fait, un tel tablier 101 peut être constitué par un grillage (plus particulièrement dans le cas d'une moustiquaire ou analogue) ou par une pièce en tissu et/ou en matière synthétique (plus particulièrement dans le cas d'un store, d'une bâche de piscine ou analogue). Un tel tablier 101 peut, encore, être constitué par une pluralité de lames, notamment articulées entre elles, plus particulièrement dans le cas d'un volet roulant ou d'une porte de garage.

Selon l'invention, une telle installation 10 comporte, encore, un dispositif 1 de détection présentant les caractéristiques techniques décrites ci-dessus.

A ce propos, on rappellera que ce dispositif 1 comporte des moyens d'émission 2 et de réception 4.

Aussi et selon un premier mode de réalisation de la présente invention, ces moyens d'émission 2 et de réception 4 sont, chacun, au moins en partie constitués par une coulisse latérale (100 ; 100'), que comporte cette installation de fermeture 10.

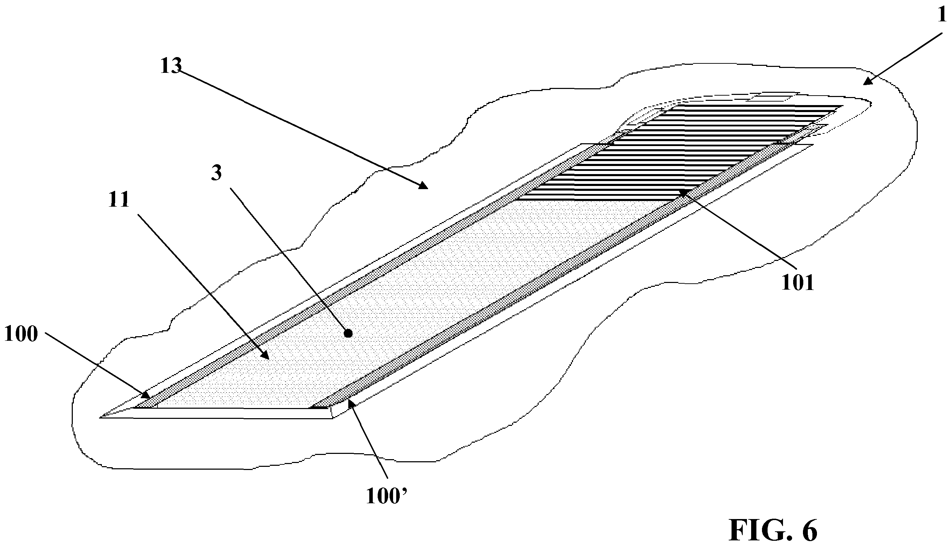

En effet et tel que visible sur les figures 1, 5 et 6, une telle coulisse (100 ; 100') comporte un profilé creux (de section parallélépipédique, de préférence rectangulaire ou carrée) tel que susmentionné et constituant un guide d'onde (200 ; 400).

Une telle coulisse (100 ; 100') comporte, encore, un fond constituant la paroi (203 ; 403) d'un guide d'onde (200 ; 400), cette paroi (203 ; 403) étant orientée en direction du moyen de réception 4, respectivement du moyen d'émission 2.

C'est, plus particulièrement, au niveau du fond d'une telle coulisse (100 ; 100') qu'est définie au moins une ouverture (204, 204' ; 404, 404') telle que susmentionnée et que comporte l'antenne d'émission 20 ou l'antenne de réception 40.

Finalement, une telle coulisse (100 ; 100') comporte deux ailes parallèles s'étendant à partir du fond et constituant les deux ailes (240, 240' ; 440, 440') du dispositif de détection 1 telles que susmentionnées et que comporte le moyen 24 pour diriger le signal électromagnétique 3 en direction du moyen de réception 4, respectivement le moyen 44 pour diriger ce signal électromagnétique 3 en direction des ouvertures (404 ; 404') de l'antenne de réception 40.

Cependant et selon un autre mode de réalisation illustré figure 7, les moyens d'émission 2 et de réception 4 sont distincts d'une telle coulisse latérale (100 ; 100').

Dans un pareil cas, ces moyens d'émission 2 et de réception 4 s'étendent parallèlement à une telle coulisse latérale (100 ; 100') et peuvent être, soit positionnés à proximité d'une telle coulisse latérale (100 ; 100'), soit encore (figure 7) être rapportés (directement ou indirectement) sur une telle coulisse latérale (100 ; 100').

Ce mode de réalisation permet, alors avantageusement, d'équiper une installation 10 de fermeture déjà existante avec un dispositif de détection 1 conforme à l'invention, voire de procéder à un remplacement d'un tel dispositif 1 défectueux.

Un autre avantage de ce mode de réalisation consiste en ce que la distinction entre, d'une part, les moyens d'émission 2 et les moyens de réception 4 et, d'autre part, les coulisses latérales (100 ; 100') permet, avantageusement, d'éviter les parasites générés par les éléments mécaniques ou électriques liés au fonctionnement du tablier 101 de l'installation 10 de fermeture.

Selon une caractéristique additionnelle, une telle installation de fermeture 10 peut, encore, comporter un moyen pour détecter la présence d'un élément mobile au niveau de l'ouverture 11.

En fait, un tel moyen de détection de présence est constitué par un dispositif de détection 1 décrit ci-dessus et présentant les caractéristiques susmentionnées. Ce dispositif de détection 1 comporte, alors, des moyens d'émission 2 et de réception 4, chacun, au moins en partie constitué par une coulisse latérale (100 ; 100') ou s'étendent parallèlement à une telle coulisse latérale (100 ; 100'), ceci à proximité d'une telle coulisse latérale (100 ; 100') ou en étant rapportés sur une telle coulisse latérale (100 ; 100').

A ce propos, on observera qu'un tel moyen de détection permet, alors, de détecter la présence d'un élément mobile au niveau de cette ouverture 11, voire le passage d'un tel élément mobile au travers de cette ouverture 11.

Ainsi, une telle installation 10 de fermeture pourvue d'un tel moyen de détection peut, alors avantageusement, être utilisée pour détecter :
- le passage d'un individu, plus particulièrement lors d'une tentative d'intrusion à l'intérieur d'un bâtiment 12 ;
- le passage (notamment l'introduction) d'un outil, notamment sous le tablier 101, ou la mise en mouvement de ce tablier 101 lors une tentative d'effraction d'un bâtiment 12 ;
- la chute d'un enfant dans une piscine 13...

Une telle installation 10 de fermeture peut, alors, comporter un moyen pour détecter une effraction, ce moyen de détection pouvant, avantageusement, être constitué par un dispositif de détection 1 décrit ci-dessus et présentant les caractéristiques susmentionnées.

Cette installation 10 équipera, alors plus particulièrement, un bâtiment 12 présentant une ouverture 11 refermée par un volet roulant ou une porte de garage.

Une autre caractéristique de l'installation 10 de fermeture conforme à l'invention consiste en ce qu'elle peut, encore, comporter, d'une part, un moyen 102 pour le déploiement et pour le repliement du tablier 101 et, d'autre part, un moteur 103 pour l'entraînement de ce moyen 102 de déploiement/repliement.

A ce propos, on observera que ce moyen 102 de déploiement/repliement peut (plus particulièrement dans le cas d'un volet roulant, d'une moustiquaire, d'un store ou d'une bâche de piscine) être constitué par un arbre sur lequel est enroulé et à partir duquel est déroulé le tablier 101 que comporte l'installation 10.

Cette installation 10 comporte, alors encore, un moyen 104 pour commander le moteur 103, ce moyen de commande 104 étant, plus particulièrement, conçu pour commander la mise en route et/ou l'arrêt de ce moteur 103.

Selon une première caractéristique additionnelle, cette installation 10 comporte, encore, un moyen pour détecter une fin de course (haute et/ou basse) du tablier 101 et/ou un moyen pour détecter un obstacle sur la trajectoire de ce tablier 101.

En fait et selon l'invention, un tel moyen de détection (de fin de course ou d'obstacle) est, avantageusement, constitué par un dispositif de détection 1 décrit ci-dessus et présentant les caractéristiques susmentionnées.

Ce moyen de détection est, alors, raccordé au moyen 104 pour commander le moteur 103 qui constitue, en cas de détection, un moyen pour commander l'arrêt de ce moteur 103.

A ce propos, on observera qu'une installation 10 de fermeture pourvue d'un moyen de détection d'obstacle peut, alors avantageusement, être utilisée pour détecter la présence d'un individu (notamment un enfant), d'un animal ou d'un objet (par exemple un élément de mobilier, un pot de fleurs ou autre) se trouvant sur la trajectoire du tablier 101 lors de son déploiement.

Selon une deuxième caractéristique additionnelle, cette installation 10 de fermeture peut comporter un moyen pour détecter la position du tablier 101 de l'installation 10, plus particulièrement par rapport à l'ouverture 11.

Là encore, un tel moyen de détection peut être constitué par un dispositif de détection 1 décrit ci-dessus et présentant les caractéristiques susmentionnées.

Ce moyen de détection de la position du tablier 101 peut être complété par un moyen, que comporte l'installation 10, et qui est conçu pour relever des paramètres environnementaux comme la luminosité, la présence, l'absence, l'éloignement ou le rapprochement d'un élément mobile de l'installation 10, plus particulièrement de l'ouverture 11 fermée par cette installation 10. Un tel moyen pour relever des paramètres environnementaux peut, également, être conçu pour relever des paramètres météorologiques comme, par exemple, la température, la pluie ou l'ensoleillement.

Tel qu'évoqué ci-dessus, cette installation 10 comporte un moteur 103 ainsi qu'un moyen 104 pour commander ce moteur 103. Ce moyen 104 de commande est, alors, raccordé au moyen de relevé des paramètres environnementaux ainsi qu'au moyen de détection de la position du tablier 101.

Ainsi, c'est, plus particulièrement, en fonction des paramètres environnementaux relevés et de la position du tablier 101 que ce moyen de commande 104 va commander le moteur 103 d'entraînement de ce tablier 101 pour, en fonction de ces paramètres et de cette position, déployer ou replier ce tablier 101.

L'installation 10 de fermeture pourvue d'un tel moyen de relevé de paramètres et d'un tel moyen de détection de la position du tablier 101 peut, alors avantageusement, être utilisée pour relever un paramètre comme :
- la luminosité à l'extérieur et/ou à l'intérieur du bâtiment 12 en vue de commander le moteur 103 pour une ouverture ou une fermeture du tablier 101, plus particulièrement d'un volet roulant, d'un store ou d'une moustiquaire équipant ce bâtiment 12 ;
- la présence ou le rapprochement d'un véhicule automobile en vue de la commande d'ouverture d'une porte de garage ;
- l'absence ou l'éloignement d'un tel véhicule en vue de la commande de fermeture d'une telle porte de garage ;
- la pluie ou la température (notamment de l'air extérieur ou intérieur à un bâtiment, de l'air extérieur ou de l'eau d'une piscine) en vue de commander l'ouverture ou la fermeture d'un volet roulant, d'un store, d'une moustiquaire, d'une bâche de piscine 13 ou analogue.

Bien entendu, les moyens de détection correspondant à une ou plusieurs de ces deux caractéristiques additionnelles (notamment et selon un mode particulier de réalisation, à l'ensemble de ces caractéristiques additionnelles) et/ou au moyen de détection de présence et/ou au moyen de détection d'effraction peuvent, avantageusement, être prévus au niveau d'une même installation 10 de fermeture d'une ouverture 11.

De manière avantageuse, une partie au moins (voire l'intégralité) de ces moyens de détection peut être constituée par un unique dispositif de détection 1 conforme à la présente invention et présentant les caractéristiques décrites ci-dessus.

Un mode particulier de réalisation consiste en ce que l'ensemble de ces moyens de détection (avantageusement définis par un même dispositif de détection 1) peut être défini au niveau d'une installation 10 de fermeture d'une ouverture 11 que comporte un bâtiment 12, cette installation 10 étant constituée par un volet roulant ou par un store.

Finalement, une installation 10 de fermeture d'une ouverture 11 telle que décrite ci-dessus peut, encore, comporter un moyen d'alerte visuelle et/ou sonore.

Un tel moyen d'alerte peut être actionné en cas de détection, par le dispositif de détection 1, selon le cas, d'une présence d'un élément mobile, d'une effraction, d'une fin de course ou d'un obstacle, ceci corrélativement à la nature du moyen de détection et/ou de l'événement détecté.

Tel qu'évoqué ci-dessus, l'invention concerne, encore, un procédé pour la détection de la présence d'un objet ou d'un être vivant entre deux bornes, ce procédé étant mis en oeuvre par le dispositif de détection 1 décrit ci-dessus et que comporte une installation (8, 10) telle décrite ci-dessus.

Ce procédé comporte une première étape consistant, comme exposé ci-dessus, à déterminer la fonction de transfert FT susmentionnée et reliant un signal reçu SR à un signal de commande SC, ceci au cours d'une phase de calibrage.

A ce propos, il convient de distinguer deux types de dispositifs de détection 1 selon que l'installation (8, 10) comporte ou non un tablier 101.

Un premier type correspond à une installation 8 dépourvue de tablier 101 et pour laquelle on détermine une fonction de transfert FT « statique » caractérisée en ce que, pour un signal de commande SC donné, on s'attend à recevoir un signal reçu SR donné. Ce signal reçu SR est lié au signal de commande SC par une fonction de transfert FT invariable, de préférence de type linéaire.

Un deuxième type correspond à l'invention, c'est à dire à une installation 10 pourvue d'un tablier 101 pouvant ouvrir et refermer l'ouverture 11.

Dans un pareil cas, il y a potentiellement une infinité de fonctions de transfert FT en fonction de la position du tablier 101.

On définit, donc, une fonction de transfert FT « dynamique » qui est, en fait, une fonction de la position de ce tablier 101.

A titre d'exemple de fonction de transfert FT « dynamique » il est possible de considérer la fonction de transfert FT correspondant à la puissance P d'un signal électrique. Dans un pareil cas, la puissance du signal électrique reçu P(SR) s'énonce, en fonction de la puissance du signal de commande P(SC), conformément à la relation P(SR)=kP(SC) dans laquelle le paramètre k est fonction de la longueur 1 de tablier déroulé k(1).

Tel qu'évoqué ci-dessus, ce procédé comporte une deuxième étape consistant à analyser le signal reçu SR par rapport à la fonction de transfert FT attendue et déterminée lors de l'étape de calibration, ceci pour au moins une valeur du signal de commande SC.

Pour une installation du premier type et dépourvue de tablier 101, l'étape d'analyse consiste à rechercher un écart significatif entre, d'une part, le signal reçu SR (ou une composante de ce signal telle sa puissance) et, d'autre part, le signal attendu et défini en fonction de la fonction de transfert FT prédéterminée.

Pour une installation du second type et comportant un tablier 101, l'étape d'analyse consiste, d'une part, à suivre/définir régulièrement la position du tablier 101 et, d'autre part et en cas de détection d'un écart entre signaux reçu SR et attendu FT, à déterminer si cet écart correspond à un déplacement normal du tablier 101 (détection d'un écart non significatif) ou à la présence d'un être vivant ou d'un objet sur la trajectoire de ce tablier 101 (détection d'un écart significatif).

Dans un pareil cas, la fonction de transfert FT de référence varie, en fait, dynamiquement et le procédé consiste, en cas détection d'un écart, à déterminer si cet écart correspond (écart non significatif) ou non (écart significatif) à une variation possible de cette fonction de transfert FT, ceci pour détecter la présence d'un être vivant ou d'un objet, plus particulièrement en cas de détection d'un écart significatif.

Tel qu'évoqué ci-dessus, la deuxième étape d'analyse permet de détecter un écart significatif entre le signal reçu SR et la fonction de transfert FT attendue. En cas de détection d'un tel écart, cette deuxième étape du procédé consiste, encore et de manière additionnelle, à analyser cet écart en vue d'identifier (par l'intermédiaire d'un moyen d'identification que comporte le dispositif de détection 1, plus particulièrement son moyen 5 de gestion) la nature de l'événement correspondant à cet écart et, ainsi, à déclencher (au cours de la troisième étape du procédé) une action appropriée à l'événement identifié.

A ce propos et selon une autre caractéristique, ce procédé consiste, alors également et préalablement à l'utilisation d'une installation (plus particulièrement au cours d'une phase de calibrage) :
- à provoquer différents événements (fin de course, obstacle, passage, intrusion...) et à relever l'influence d'un tel événement sur le signal reçu SR. La modification du signal reçu SR par rapport à une fonction de transfert FT attendue est propre à chaque événement et constitue la « signature » de cet événement. Une telle « signature » peut, par exemple, correspondre à une forme d'écart en fonction du temps (des baisses soudaines de puissance, ou au contraire une baisse de faible amplitude mais prolongée) ;
- à établir une correspondance entre une « signature » déterminée et un événement déterminé, voire à enregistrer une telle correspondance au niveau d'une mémoire que comporte le dispositif de détection 1 (plus particulièrement son moyen de gestion 5).

La deuxième étape du procédé d'analyse consiste, alors et en phase d'utilisation d'une installation (8, 10):
- à détecter un écart significatif entre le signal reçu SR et la fonction de transfert FT attendue ;
- à analyser la « signature » correspondant à cet écart ;
- à identifier l'événement correspondant à la « signature » analysée, ceci en fonction de la correspondance préalablement établie.

Finalement et selon une troisième étape de ce procédé, il est déclenché une action appropriée et correspondant à l'événement détecté.

## Revendications

1. Installation (10) de fermeture d'une ouverture (11) que présente un bâtiment (12) ou une piscine (13) et qui comporte, d'une part, deux coulisses latérales (100 ; 100') destinées à venir se positionner en regard l'une (100) de l'autre (100'), ceci de part et d'autre de l'ouverture (11), d'autre part, un tablier (101) destiné à refermer l'ouverture (11) et présentant des extrémités latérales (1010 ; 1010') montées en coulissement à l'intérieur des coulisses latérales (100 ; 100'), **caractérisée par le fait qu'**elle comporte, encore, un dispositif (1) de détection de la position du tablier (101) entre les deux coulisses latérales, ce dispositif (1) de détection comportant :
- un moyen (2) pour émettre un signal électromagnétique comportant, d'une part, une antenne d'émission (20), s'étendant parallèlement à une première coulisse latérale, et adoptant la forme d'un guide d'onde tubulaire (200) présentant au moins une paroi (203) pourvue d'au moins une ouverture (204, 204') et, d'autre part, un moyen (21) pour exciter cette antenne (20) en vue de l'émission d'un tel signal par cette antenne (20) ;
- un moyen (4) pour recevoir ce signal électromagnétique comportant, d'une part, une antenne de réception (40), s'étendant parallèlement à une deuxième coulisse latérale, adoptant la forme d'un guide d'onde tubulaire (400) présentant au moins une paroi (403) pourvue d'au moins une ouverture (404, 404') et, d'autre part, un moyen (41) pour détecter un tel signal ;
- un moyen de détermination de la position du tablier par analyse d'un signal reçu (SR) par le moyen de réception (4) en fonction d'un signal de commande (SC) du moyen d'émission (2), ce signal reçu (SR) et ce signal de commande (SC) étant reliés par une fonction de transfert (FT) dépendant de la position du tablier (101), le moyen de détermination de la position du tablier étant adapté pour suivre/définir régulièrement la position du tablier et pour déterminer si il y a un écart entre le signal reçu (SR) et un signal attendu calculé sur la base de la fonction de transfert (FT), le moyen de détermination de la position du tablier étant aussi adapté pour déterminer un déplacement normal du tablier si l'écart n'est pas significatif, et pour détecter la présence d'un être vivant ou d'un objet sur la trajectoire du tablier si l'écart est significatif.

2. Installation (10) de fermeture d'une ouverture (11) selon la revendication 1, **caractérisée par le fait qu'**elle comporte, encore, un moyen pour détecter une effraction ou une présence d'un élément mobile au niveau de l'ouverture (11), ce moyen pour détecter une effraction ou une présence étant constitué par le dispositif (1) de détection de la position du tablier (101).

3. Installation (10) de fermeture d'une ouverture (11) selon l'une quelconque des revendications précédentes, **caractérisée par le fait qu'**elle comporte, encore :
- un moteur (103) d'entraînement d'un moyen (102) pour le déploiement et pour le repliement du tablier (101);
- un moyen pour détecter un obstacle sur la trajectoire du tablier (101) ou une fin de course de ce tablier (101), ce moyen pour détecter un obstacle ou une fin de course étant constitué par le dispositif (1) de détection de la position du tablier (101) ;
- un moyen (104), raccordé au moyen de détection d'obstacle ou de fin de course, pour commander l'arrêt du moteur (103) d'entraînement en cas de détection d'obstacle ou de fin de course.

4. Installation (10) de fermeture d'une ouverture (11) selon l'une quelconque des revendications précédentes, **caractérisée par le fait qu'**elle comporte, encore :
- un moteur (103) d'entraînement d'un moyen (102) pour le déploiement et pour le repliement du tablier (101);
- un moyen pour relever des paramètres environnementaux, notamment météorologiques ;
- un moyen (104), raccordé au moyen de relevé des paramètres environnementaux et au dispositif (1) de détection de la position du tablier (101), pour commander le moteur (103) d'entraînement en fonction des paramètres relevés et de la position du tablier (101).

5. Installation (10) de fermeture d'une ouverture (11) selon l'une quelconque des revendications précédentes, **caractérisée par le fait que** les moyens d'émission (2) et de réception (4) sont, chacun, au moins en partie, constitués par une coulisse latérale (100 ; 100') ou s'étendent parallèlement à une telle coulisse latérale (100 ; 100'), ceci à proximité d'une telle coulisse latérale (100 ; 100') ou en étant rapportés sur une telle coulisse latérale (100 ; 100').

6. Installation (10) de fermeture d'une ouverture (11) selon l'une quelconque des revendications précédentes, **caractérisée par le fait que** le guide d'onde (200) de l'antenne d'émission (20), respectivement le guide d'onde (400) de l'antenne de réception (40), d'une part, comporte une extrémité proximale (201 ; 401) et une extrémité distale (202 ; 402) et, d'autre part, reçoit intérieurement le moyen d'excitation (21), respectivement le moyen de détection (41), qui est positionné dans une zone médiane du guide d'onde (200 ; 400) comprise entre cette extrémité proximale (201 ; 401) et cette extrémité distale (202 ; 402).

7. Installation (10) de fermeture d'une ouverture (11) selon l'une quelconque des revendications précédentes, **caractérisée par le fait que** le moyen d'excitation (21), respectivement le moyen de détection (41), est positionné à proximité d'une ouverture (204, 204' ; 404, 404') dont est pourvue la paroi (203 ; 403) du guide d'onde (200 ; 400) de l'antenne d'émission (20), respectivement de l'antenne de réception (40), dans une zone médiane de ce guide d'onde (200 ; 400), voire encore positionné au droit ou au travers d'un orifice traversant ménagé dans une paroi (207 ; 407) du guide d'onde (200 ; 400) parallèle à la paroi (203 ; 403) pourvue d'ouvertures (202, 202' ; 404, 404'), ceci dans une zone médiane de ce guide d'onde (200 ; 400).

8. Installation (10) de fermeture d'une ouverture (11) selon l'une quelconque des revendications 6 ou 7, **caractérisée par le fait que** le guide d'onde (200) de l'antenne d'émission (20), respectivement le guide d'onde (400) de l'antenne de réception (40), comporte une extrémité proximale (201 ; 401) et une extrémité distale (202 ; 402) de type débouchant.

9. Installation (10) de fermeture d'une ouverture (11) selon l'une quelconque des revendications 1 à 5, **caractérisée par le fait que** le guide d'onde (200 ; 400) de l'antenne d'émission (20), respectivement de l'antenne de réception (40), comporte, d'une part, une extrémité proximale (201 ; 401) à l'intérieur de laquelle est engagé le moyen d'excitation (21), respectivement le moyen de détection (41), et, d'autre part, une extrémité distale (202 ; 402) à laquelle est associé un moyen (42) pour la fermeture de ce guide d'onde (200 ; 400).

10. Installation (10) de fermeture d'une ouverture (11) selon l'une quelconque des revendications précédentes, **caractérisée par le fait que** la ou les ouvertures (204, 204' ; 404, 404') sont ménagées au niveau d'une paroi (203 ; 403) du guide d'onde (200 ; 400) de l'antenne d'émission (20), respectivement de l'antenne de réception (40), orientée en direction de l'antenne de réception (40), respectivement de l'antenne d'émission (20).

11. Installation (10) de fermeture d'une ouverture (11) selon l'une quelconque des revendications précédentes, **caractérisée par le fait que** la ou les ouvertures (204, 204' ; 404, 404') présentent une forme allongée et s'étendent de manière sensiblement parallèle à la direction longitudinale d'extension du guide d'onde (200 ; 400) au niveau duquel une telle ouverture (204, 204' ; 404, 404') est ménagée.

12. Installation (10) de fermeture d'une ouverture (11) selon la revendication 11, **caractérisée par le fait que** la ou les ouvertures (204, 204' ; 404, 404') adoptent la forme d'une fente, de préférence rectangulaire, et présentent une longueur (1) correspondant sensiblement à la moitié de la longueur d'onde (λ).

13. Installation (10) de fermeture d'une ouverture (11) selon l'une quelconque des revendications précédentes, **caractérisée par le fait que**, d'une part, la paroi (203 ; 403) du guide d'onde tubulaire (200 ; 400) est pourvue d'une pluralité d'ouvertures (204, 204' ; 404, 404') alignées selon au moins une rangée (205, 205' ; 405, 405') d'ouvertures (204, 204' ; 404, 404') et que, d'autre part, les ouvertures (204, 204' ; 404, 404') d'une même rangée (205, 205' ; 405, 405') sont positionnées sensiblement en un endroit où le champ électromagnétique est maximum.

14. Installation (10) de fermeture d'une ouverture (11) selon l'une quelconque des revendications précédentes, **caractérisée par le fait que**, d'une part, la paroi (203 ; 403) du guide d'onde tubulaire (200 ; 400) est pourvue d'une pluralité d'ouvertures (204, 204' ; 404, 404') alignées selon au moins une rangée (205, 205' ; 405, 405') d'ouvertures (204, 204' ; 404, 404') et que, d'autre part, le pas (p) entre deux ouvertures (204, 204' ; 404 ; 404') successives d'une même rangée (205 , 205' ; 405 , 405') est compris entre 2 et 6 fois la longueur d'onde guidée divisée par 2 (2*λg/2 ≤ p ≤ 6*λg/2), de préférence de l'ordre de 4 fois cette longueur d'onde guidée divisée par 2 (p ≈ 4*λg/2).

15. Installation (10) de fermeture d'une ouverture (11) selon l'une quelconque des revendications précédentes, **caractérisée par le fait que**, d'une part, la paroi (203 ; 403) du guide d'onde tubulaire (200 ; 400) est pourvue d'une pluralité d'ouvertures (204, 204' ; 404, 404') alignées selon deux rangées (205, 205' ; 405, 405') parallèles d'ouvertures (204, 204' ; 404, 404') et que, d'autre part, les deux rangées (205, 205' ; 405, 405') s'étendent de part et d'autre d'un axe (206 ; 406), de préférence constitué par l'axe médian de la paroi (203 ; 403) du guide d'onde (200 ; 400), et/ou sont espacées d'une distance correspondant sensiblement à la moitié de la largeur de cette paroi (203 ; 403).

16. Installation (10) de fermeture d'une ouverture (11) selon l'une quelconque des revendications précédentes, **caractérisée par le fait que** le moyen d'émission (2), respectivement le moyen de réception (4), comportent un moyen (23 ; 43) pour la protection de l'antenne d'émission (20), respectivement de l'antenne de réception (40).

17. Installation (10) de fermeture d'une ouverture (11) selon l'une quelconque des revendications précédentes, **caractérisée par le fait que** l'antenne (20) du moyen d'émission (2) comporte un moyen (24) pour diriger le signal électromagnétique en direction de l'antenne (40) du moyen de réception (4).

18. Installation (10) de fermeture d'une ouverture (11) selon l'une quelconque des revendications précédentes, **caractérisée par le fait que** l'antenne (20) du moyen d'émission (2), respectivement l'antenne (40) du moyen (4) de réception, comporte au moins une aile s'étendant en direction de l'antenne (40) du moyen (4) de réception, respectivement en direction de l'antenne (20) du moyen d'émission (2), ceci à partir de la paroi (203 ; 403) du guide d'onde (200 ; 400) pourvue d'au moins ouverture (204, 204' ; 404, 404').

19. Installation (10) de fermeture d'une ouverture (11) selon l'une quelconque des revendications précédentes, **caractérisée par le fait qu'**il comporte au moins un capteur solaire équipant le moyen (2) pour émettre un signal électromagnétique, respectivement le moyen (4) pour recevoir ce signal électromagnétique, ceci pour une alimentation électrique du moyen d'excitation (21), respectivement du moyen de détection (41), que comporte ce moyen d'émission (2), respectivement ce moyen de réception (4).

20. Installation (10) de fermeture d'une ouverture (11) selon l'une quelconque des revendications précédentes, **caractérisée par le fait qu'**il comporte un moyen (5) pour la gestion des moyens d'émission (2) et de réception (4), ce moyen (5) de gestion comportant des moyens pour assurer une émission ainsi qu'une réception de manière périodique et/ou à intervalles réguliers.

## Patentansprüche

1. Anlage (10) zum Schließen einer Öffnung (11), welche ein Gebäude (12) oder ein Schwimmbad (13) aufweist, und die einerseits zwei seitliche Führungen (100 ; 100'), die dazu bestimmt sind, sich die eine (100) gegenüber der anderen (100') zu positionieren, und zwar an beiden Seiten der Öffnung (11), andererseits eine Decke (101), die dazu bestimmt ist, die Öffnung (11) zu schließen, und seitliche Enden (1010 ; 1010') aufweist, die gleitbar innerhalb der seitlichen Führungen (100 ; 100') gelagert sind, umfasst, **dadurch gekennzeichnet, dass** sie auch eine Vorrichtung (1) zum Erfassen der Position der Decke (101) zwischen den beiden seitlichen Führungen umfaßt, wobei diese Vorrichtung (1) zum Erfassen Folgendes umfasst:
- ein Mittel (2) zum Aussenden eines elektromagnetischen Signals, das einerseits eine Sendeantenne (20), die sich parallel zu einer ersten seitlichen Führung erstreckt und die Form eines rohrförmigen Wellenleiters (200) annimmt, der zumindest eine mit zumindest einer Öffnung (204, 204') versehene Wand (203) aufweist, und andererseits ein Mittel (21) zur Erregung dieser Antenne (20) zwecks der Aussendung eines derartigen Signals durch die Antenne (20) umfasst;
- ein Mittel (4) zum Empfangen dieses elektromagnetischen Signals, das einerseits eine Empfangsantenne (40), die sich parallel zu einer zweiten seitlichen Führung erstreckt, die die Form eines rohrförmigen Wellenleiters (400) annimmt, der zumindest eine mit zumindest einer Öffnung (404, 404') versehene Wand (403) aufweist, und andererseits ein Mittel (41) zur Erfassung eines derartigen Signals umfasst ;
- ein Mittel zum Bestimmen der Position der Decke durch Analyse eines durch das Empfangsmittel (4) empfangenen Signals (SR) in Abhängigkeit eines Steuersignals (SC) des Sendemittels (2), wobei dieses empfangene Signal (SR) und dieses Steuersignal (SC) durch eine von der Position der Decke (101) abhängende Übertragungsfunktion (FT) verbunden sind, wobei das Mittel zur Bestimmung der Position der Decke angepasst ist, um die Position der Decke regelmäßig zu folgen/definieren und um zu bestimmen, ob es einen Abstand zwischen dem empfangenen Signal (SR) und einem auf Basis der Übertragungsfunktion (FT) berechneten erwarteten Signal gibt, wobei das Mittel zur Bestimmung der Position der Decke auch angepasst ist, um eine normale Bewegung der Decke zu bestimmen, wenn der Abstand nicht bedeutend ist, und um die Anwesenheit eines Lebewesens oder eines Gegenstands auf dem Weg der Decke zu erfassen, wenn der Abstand bedeutend ist.

2. Anlage (10) zum Schließen einer Öffnung (11) nach Anspruch 1, **dadurch gekennzeichnet, dass** sie auch ein Mittel zum Erfassen eines Einbruchs oder einer Anwesenheit eines beweglichen Elements im Bereich der Öffnung (11) umfasst, wobei dieses Mittel zum Erfassen eines Einbruchs oder einer Anwesenheit aus der Vorrichtung (1) zum Erfassen der Position der Decke (101) besteht.

3. Anlage (10) zum Schließen einer Öffnung (11) nach irgendeinem der vorhergehenden Ansprüche, **dadurch gekennzeichnet, dass** sie auch Folgendes umfasst:
- einen Motor (103) zum Antrieb eines Mittels (102) für die Entfaltung und die Faltung der Decke (101);
- ein Mittel zum Erfassen eines Hindernisses auf dem Weg der Decke (101) oder eines Hubendes dieser Decke (101), wobei dieses Mittel zum Erfassen eines Hindernisses oder eines Hubendes aus der Vorrichtung (1) zum Erfassen der Position der Decke (101) besteht;
- ein an dem Mittel zum Erfassen eines Hindernisses oder eines Hubendes angeschlossenes Mittel (104) zum Steuern des Anhaltens des Antriebmotors (103) im Falle der Erfassung eines Hindernisses oder eines Hubendes.

4. Anlage (10) zum Schließen einer Öffnung (11) nach iregendeinem der vorhergehenden Ansprüche, **dadurch gekennzeichnet, dass** sie auch Folgendes umfasst:
- einen Motor (103) zum Antrieb eines Mittels (102) für die Entfaltung und die Faltung der Decke (101);
- ein Mittel zum Aufzeichnen der Umweltparameter, nämlich der meteorologischen Parameter;
- ein an dem Mittel zum Aufzeichnen der Umweltparameter und der Vorrichtung (1) zum Erfassen der Position der Decke (101) angeschlossenes Mittel (104) zum Steuern des Antriebmotors (103) in Abhängigkeit der aufgezeichneten Parameter und der Position der Decke (101).

5. Anlage (10) zum Schließen einer Öffnung (11) nach irgendeinem der vorhergehenden Ansprüche, **dadurch gekennzeichnet, dass** die Sende- (2) und Empfangsmittel (4) jeweils zumindest zum Teil aus einer seitlichen Führung (100 ; 100') bestehen oder sich parallel zu einer solchen seitlichen Führung (100 ; 100') erstrecken, und zwar in der Nähe einer solchen seitlichen Führung (100 ; 100'), oder dadurch, dass sie auf einer solchen seitlichen Führung (100 ; 100') angebracht befestigt sind.

6. Anlage (10) zum Schließen einer Öffnung (11) nach irgendeinem der vorhergehenden Ansprüche, **dadurch gekennzeichnet, dass** der Wellenleiter (200) der Sendeantenne (20) bzw. der Wellenleiter (400) der Empfangsantenne (40) einerseits ein proximales Ende (201 ; 401) und ein distales Ende (202 ; 402) umfasst und andererseits intern das Erregungsmittel (21) bzw. das Erfassungsmittel (41), das in einem mittleren Bereich des Wellenleiters (200 ; 400) zwischen diesem proximalen Ende (201 ; 401) und diesem distalen Ende (202 ; 402) positioniert ist, aufnimmt.

7. Anlage (10) zum Schließen einer Öffnung (11) nach irgendeinem der vorhergehenden Ansprüche, **dadurch gekennzeichnet, dass** das Erregungsmittel (21) bzw. das Erfassungsmittel (41) in der Nähe einer Öffnung (204, 204' ; 404, 404'), mit der die Wand (203 ; 403) des Wellenleiters (200 ; 400) der Sendeantenne (20) bzw. der Empfangsantenne (40) versehen ist, in einem mittleren Bereich dieses Wellenleiters (200 ; 400) angeordnet ist, sogar auch gegenüber einer oder durch eine Durchgangsöffnung hindurch, die in einer Wand (207 ; 407) des Wellenleiters (200 ; 400) parallel zur mit Öffnungen (202, 202'; 404, 404') versehenen Wand (203 ; 403) vorgesehen ist, und zwar in einem mittleren Bereich des Wellenleiters (200 ; 400), positioniert ist.

8. Anlage (10) zum Schließen einer Öffnung (11) nach irgendeinem der Ansprüche 6 oder 7, **dadurch gekennzeichnet, dass** der Wellenleiter (200) der Sendeantenne (20) bzw. der Wellenleiter (400) der Empfangsantenne (40) ein proximales Ende (201 ; 401) und ein distales Ende (202; 402) der ausmündenden Art umfasst.

9. Anlage (10) zum Schließen einer Öffnung (11) nach irgendeinem der Ansprüche 1 bis 5, **dadurch gekennzeichnet, dass** der Wellenleiter (200 ; 400) der Sendeantenne (20) bzw. der Empfangsantenne (40) einerseits ein proximales Ende (201 ; 401), in dem das Erregungsmittel (21) bzw. das Erfassungsmittel (41) eingeführt ist, und andererseits ein distales Ende (202 ; 402), dem ein Mittel (42) zum Schließen dieses Wellenleiters (200 ; 400) zugeordnet ist, umfasst.

10. Anlage (10) zum Schließen einer Öffnung (11) nach irgendeinem der vorhergehenden Ansprüche, **dadurch gekennzeichnet, dass** die Öffnung oder Öffnungen, (204, 204' ; 404, 404') im Bereich einer in Richtung der Empfangsantenne (40) bzw. der Sendeantenne (20) gerichteten Wand (203 ; 403) des Wellenleiters (200 ; 400) der Sendeantenne (20) bzw. der Empfangsantenne (40) vorgesehen sind.

11. Anlage (10) zum Schließen einer Öffnung (11) nach irgendeinem der vorhergehenden Ansprüche, **dadurch gekennzeichnet, dass** die Öffnung oder Öffnungen (204, 204' ; 404, 404') eine längliche Form aufweisen und sich im wesentlichen parallel zur Längserstreckungsrichtung des Wellenleiters (200 ; 400) erstrecken, in dessen Bereich eine solche Öffnung (204, 204' ; 404, 404') vorgesehen ist.

12. Anlage (10) zum Schließen einer Öffnung (11) nach Anspruch 11, **dadurch gekennzeichnet, dass** die Öffnung oder Öffnungen (204, 204' ; 404, 404') die Form eines vorzugsweise rechteckigen Schlitzes annehmen und eine Länge (1) aufweisen, die im wesentlichen der Hälfte der Wellenlänge (λ) entspricht.

13. Anlage (10) zum Schließen einer Öffnung (11) nach irgendeinem der vorhergehenden Ansprüche, **dadurch gekennzeichnet, dass** einerseits die Wand (203 ; 403) des rohrförmigen Wellenleiters (200 ; 400) mit einer Vielzahl von Öffnungen (204, 204' ; 404, 404') versehen ist, die in mindestens einer Reihe (205, 205' ; 405, 405') von Öffnungen (204, 204' ; 404, 404') ausgerichtet sind, und andererseits die Öffnungen (204, 204' ; 404, 404') einer selben Reihe (205, 205' ; 405, 405') im wesentlichen an einer Stelle positioniert sind, wo das elektromagnetische Feld maximal ist.

14. Anlage (10) zum Schließen einer Öffnung (11) nach irgendeinem der vorhergehenden Ansprüche, **dadurch gekennzeichnet, dass** einerseits die Wand (203 ; 403) des rohrförmigen Wellenleiters (200 ; 400) mit einer Vielzahl von Öffnungen (204, 204' ; 404, 404') versehen ist, die in mindestens einer Reihe (205, 205' ; 405, 405') von Öffnungen (204, 204' ; 404, 404') ausgerichtet sind, und andererseits der Abstand (p) zwischen zwei aufeinanderfolgende Öffnungen (204, 204' ; 404; 404') einer selben Reihe (205, 205'; 405, 405') zwischen 2-und 6-mal die geführte Wellenlänge geteilt durch 2 (2*λg/2 ≤ p ≤ 6*λg/2), vorzugsweise in der Größenordnung von 4-mal die geführte Wellenlänge geteilt durch 2 (p ≈ 4*λg/2) liegt.

15. Anlage (10) zum Schließen einer Öffnung (11) nach irgendeinem der vorhergehenden Ansprüche, **dadurch gekennzeichnet, dass** einerseits die Wand (203; 403) des rohrförmigen Wellenleiters (200; 400) mit einer Vielzahl von Öffnungen (204, 204' ; 404, 404') versehen ist, die in zwei parallelen Reihen (205, 205' ; 405, 405') von Öffnungen (204, 204'; 404, 404') ausgerichtet sind, und andererseits sich die beiden Reihen (205, 205' ; 405, 405') beiderseits einer Achse (206; 406), die vorzugsweise aus der Mittelachse der Wand (203; 403) des Wellenleiters (200; 400) besteht, erstrecken und/oder von einander um einen Abstand beabstandet sind, der im wesentlichen der halben Breite dieser Wand (203; 403) entspricht.

16. Anlage (10) zum Schließen einer Öffnung (11) nach irgendeinem der vorhergehenden Ansprüche, **dadurch gekennzeichnet, dass** das Sendemittel (2) bzw. das Empfangsmittel (4) ein Mittel (23 ; 43) zum Schützen der Sendeantenne (20) bzw. der Empfangsantenne (40) umfasst.

17. Anlage (10) zum Schließen einer Öffnung (11) nach irgendeinem der vorhergehenden Ansprüche, **dadurch gekennzeichnet, dass** die Antenne (20) des Sendemittels (2) ein Mittel (24) umfasst, um das elektromagnetische Signal in Richtung auf die Antenne (40) des Empfangsmittels (4) zu richten.

18. Anlage (10) zum Schließen einer Öffnung (11) nach irgendeinem der vorhergehenden Ansprüche, **dadurch gekennzeichnet, dass** die Antenne (20) des Sendemittels (2) bzw. die Antenne (40) des Empfangsmittels (4) mindestens einen Flügel umfasst, der sich in Richtung auf die Antenne (40) des Empfangsmittels (4) bzw. in Richtung auf die Antenne (20) des Sendemittels (2), und zwar ab der mit zumindest einer Öffnung (204, 204' ; 404, 404') versehenen Wand (203; 403) des Wellenleiters (200 ; 400), erstreckt.

19. Anlage (10) zum Schließen einer Öffnung (11) nach irgendeinem der vorhergehenden Ansprüche, **dadurch gekennzeichnet, dass** sie mindestens einen Sonnensensor umfasst, mit dem das Mittel (2) zum Aussenden eines elektromagnetischen Signals bzw. das Mittel (4) zum Empfangen dieses elektromagnetischen Signals ausgestattet ist, und zwar für eine elektrische Stromversorgung des Erregungsmittels (21) bzw. des Erfassungsmittels (41), welches dieses Sendemittel (2) bzw. dieses Empfangsmittel (4) umfasst.

20. Anlage (10) zum Schließen einer Öffnung (11) nach irgendeinem der vorhergehenden Ansprüche, **dadurch gekennzeichnet, dass** sie ein Mittel (5) zur Verwaltung der Sende- (2) und Empfangsmittel (4) umfasst, wobei dieses Verwaltungsmittel (5) Mittel zum Sichern einer Sendung und eines Empfangs auf periodische Weise und/oder in regelmäßigen Abständen umfasst.

## Claims

1. An installation (10) for closing an opening (11), which a building (12) or a swimming pool (13) has and which includes, on the one hand, two lateral guide slides (100 ; 100') intended to be positioned one (100) opposite the other one (100'), on both sides of the opening (11), on the other hand, an apron (101) intended to close the opening (11) and having side ends (1010 ; 1010') slidably mounted inside the lateral guide slides (100 ; 100'), wherein it also includes a device (1) for detecting the position of the apron (101) between the two lateral guide slides, this detection device (1) including:
- a means (2) for transmitting an electromagnetic signal including, on the one hand, a transmitting antenna (20) extending parallel to a first lateral guide slide and adopting the shape of a tubular waveguide (200) having at least one wall (203) provided with at least one opening (204, 204') and, on the other hand, a means (21) for exciting this antenna (20) with a view to transmitting such a signal by this antenna (20);
- a means (4) for receiving this electromagnetic signal including, on the one hand, a receiving antenna (40) extending parallel to a second lateral guide slide, adopting the shape of a tubular waveguide (400) having at least one wall (403) provided with at least one opening (404, 404') and, on the other hand, a means (41) for detecting such a signal;
- a means for determining the position of the apron by analyzing a signal received (SR) by the reception means (4) depending on a signal for controlling (SC) the transmitting means (2), this received signal (SR) and this control signal (SC) being connected by a transfer function (FT) depending on the position of the apron (101), the means for determining the position of the apron being adapted to regularly follow/define the position of the apron and for determining whether there is a gap between the received signal (SR) and an expected signal calculated based on the transfer function (FT), the means for determining the position of the apron being also adapted to determine a normal displacement of the apron if the gap is not significant, and to detect the presence of a living being or an object on the trajectory of the apron if the gap is significant.

2. The installation (10) for closing an opening (11) according to claim 1, wherein it also includes a means for detecting an intrusion or a presence of a movable element at the level of the opening (11), this means for detecting an intrusion or a presence being formed by the device (1) for detecting the position of the apron (101).

3. The installation (10) for closing an opening (11) according to any one of the preceding claims, wherein it also includes:
- a motor (103) for driving a means (102) for unfolding and folding the apron (101);
- a means for detecting an obstacle on the trajectory of the apron (101) or a travel end of this apron (101), this means for detecting an obstacle or a travel end being formed by the device (1) for detecting the position of the apron (101);
- a means (104), connected to the means for detecting an obstacle or a travel end, for controlling the stopping of the driving motor (103) in the event of detecting an obstacle or a travel end.

4. The installation (10) for closing an opening (11) according to any one of the preceding claims, wherein it also includes:
- a motor (103) for driving a means (102) for unfolding and folding the apron (101);
- a means for recording environmental parameters, namely meteorological parameters;
- a means (104), connected to the means for recording the environmental parameter and the device (1) for detecting the position of the apron (101), for controlling the driving motor (103) depending on the recorded parameters and the position of the apron (101).

5. The installation (10) for closing an opening (11) according to any one of the preceding claims, wherein the transmitting (2) and receiving (4) means are each at least in part formed by a lateral guide slide (100 ; 100') or extending parallel to such a lateral guide slide (100 ; 100') in the vicinity of such a lateral guide slide (100 ; 100') or being applied against such a lateral guide slide (100 ; 100').

6. The installation (10) for closing an opening (11) according to any one of the preceding claims, wherein the waveguide (200) of the transmitting antenna (20) or the waveguide (400) of the receiving antenna (40), respectively, on the one hand, includes a proximal end (201 ; 401) and a distal end (202 ; 402) and, on the other hand, receives internally the excitation means (21) or the detection means (41), respectively, which is positioned in a median area of the waveguide (200; 400) comprised between said proximal end (201 ; 401) and said distal end (202 ; 402).

7. The installation (10) for closing an opening (11) according to any one of the preceding claims, wherein the excitation means (21) or the detection means (41), respectively, is positioned proximate an opening (204, 204' ; 404, 404'), which the wall (203 ; 403) of the waveguide (200 ; 400) of the transmitting antenna (20) or of the receiving antenna (40), respectively, is provided with in a median area of this waveguide (200 ; 400), even positioned in front of or through a through-hole provided for in a wall (207 ; 407) of the waveguide (200 ; 400) parallel to the wall (203; 403) provided with openings (202, 202' ; 404, 404') in a median area of this waveguide (200; 400).

8. The installation (10) for closing an opening (11) according to any one of claims 6 or 7, wherein the waveguide (200) of the transmitting antenna (20) or the waveguide (400) of the receiving antenna (40), respectively, includes a proximal end (201; 401) and a distal end (202; 402) of the ending type.

9. The installation (10) for closing an opening (11) according to any one of claims 1 to 5, wherein the waveguide (200 ; 400) of the transmitting antenna (20) or of the receiving antenna (40), respectively, includes, on the one hand, a proximal end (201 ; 401) inside which the excitation means (21) or the detection means (41), respectively, is inserted and, on the other hand, a distal end (202 ; 402), which a means (42) for closing said waveguide (200 ; 400) is associated with.

10. The installation (10) for closing an opening (11) according to any one of the preceding claims, wherein the opening or openings (204, 204' ; 404, 404') are provided for at the level of a wall (203 ; 403) of the waveguide (200 ; 400) of the transmitting antenna (20) or the receiving antenna (40), respectively, oriented towards the receiving antenna (40) or the transmitting antenna (20), respectively.

11. The installation (10) for closing an opening (11) according to any one of the preceding claims, wherein the opening or openings (204, 204' ; 404, 404') have an elongated shape and extend substantially parallel to the longitudinal direction of extension of the waveguide (200; 400) at the level of which such an opening (204, 204' ; 404, 404') is provided for.

12. The installation (10) for closing an opening (11) according to claim 11, wherein the opening or openings (204, 204' ; 404, 404') adopt the form of a preferably rectangular slot, and have a length (1) corresponding substantially to half the wavelength (λ).

13. The installation (10) for closing an opening (11) according to any one of the preceding claims, wherein, on the one hand, the wall (203; 403) of the tubular waveguide (200 ; 400) is provided with a plurality of openings (204, 204' ; 404, 404') aligned in at least one row (205, 205' ; 405, 405') of openings (204, 204', 404, 404') and, on the other hand, the openings (204, 204' ; 404, 404') of one and the same row (205, 205' ; 405, 405') are positioned substantially at a location where the electromagnetic field is maximum.

14. The installation (10) for closing an opening (11) according to any one of the preceding claims, wherein, on the one hand, the wall (203 ; 403) of the tubular waveguide (200 ; 400) is provided with a plurality of openings (204, 204' ; 404, 404') aligned in at least one row (205, 205' ; 405, 405') of openings (204, 204' ; 404, 404') and, on the other hand, the pitch (p) between two successive openings (204, 204' ; 404; 404') of one and the same row (205, 205' ; 405, 405') is between 2 and 6 times the guided wavelength divided by 2 (2*λg/2 ≤ p ≤ 6*λg/2), preferably of about 4 times this guided wavelength divided by 2 (p ≈ 4*λg/2).

15. The installation (10) for closing an opening (11) according to any one of the preceding claims, wherein, on the one hand, the wall (203 ; 403) of the tubular waveguide (200 ; 400) is provided with a plurality of openings (204, 204' ; 404, 404') aligned in two parallel rows (205, 205' ; 405, 405') of openings (204, 204' ; 404, 404') and, on the other hand, the two rows (205, 205' ; 405, 405') extend on both sides of an axis (206 ; 406), preferably formed by the median axis of the wall (203 ; 403) of the waveguide (200 ; 400), and/or are spaced apart by a distance corresponding substantially to half the width of this wall (203 ; 403).

16. The installation (10) for closing an opening (11) according to any one of the preceding claims, wherein the transmission means (2) or the receiving means (4), respectively, include a means (23 ; 43) for protecting the transmitting antenna (20) or the receiving antenna (40), respectively.

17. The installation (10) for closing an opening (11) according to any one of the preceding claims, wherein the antenna (20) of the transmission means (2) includes a means (24) for orienting the electromagnetic signal towards the antenna (40) of the receiving means (4).

18. The installation (10) for closing an opening (11) according to any one of the preceding claims, wherein the antenna (20) of the transmission means (2) or the antenna (40) of the receiving means (4), respectively, includes at least one wing extending towards the antenna (40) of the receiving means (4) or towards the antenna (20) of the transmission means (2), respectively, from the wall (203 ; 403) of the waveguide (200 ; 400) provided with at least one opening (204, 204' ; 404, 404').

19. The installation (10) for closing an opening (11) according to any one of the preceding claims, wherein it includes at least one solar collector, which the means (2) for transmitting an electromagnetic signal or the means (4) for receiving this electromagnetic signal, respectively, is provided with, for supplying electric current to the excitation means (21) or the detection means (41), respectively, which this transmission means (2) or this receiving means (4), respectively, includes.

20. The installation (10) for closing an opening (11) according to any one of the preceding claims, wherein it includes a means (5) for managing the transmitting (2) and receiving means (4), this management means (5) including means for ensuring a transmission as well as a reception periodically and/or at regular intervals.
